(19) Europäisches Patentamt
European Patent Office
Office européen des brevets

(11) **EP 3 281 247 B1**

(12) **EUROPÄISCHE PATENTSCHRIFT**

(45) Veröffentlichungstag und Bekanntmachung des Hinweises auf die Patenterteilung:
**23.12.2020 Patentblatt 2020/52**

(21) Anmeldenummer: **16712354.6**

(22) Anmeldetag: **30.03.2016**

(51) Int Cl.:
*H01Q 1/12* *(2006.01)*    *H01Q 9/04* *(2006.01)*

(86) Internationale Anmeldenummer:
**PCT/EP2016/056974**

(87) Internationale Veröffentlichungsnummer:
**WO 2016/162251 (13.10.2016 Gazette 2016/41)**

(54) **FAHRZEUGANTENNENSCHEIBE**

VEHICLE ANTENNA WINDOW

VITRE D'ANTENNE DE VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2015 EP 15162763**

(43) Veröffentlichungstag der Anmeldung:
**14.02.2018 Patentblatt 2018/07**

(73) Patentinhaber: **SAINT-GOBAIN GLASS FRANCE**
**92400 Courbevoie (FR)**

(72) Erfinder:
• **DROSTE, Stefan**
**52134 Herzogenrath (DE)**

• **STELLING, Bernd**
**33647 Bielefeld (DE)**
• **FRANCOIS, Guillaume**
**52064 Aachen (DE)**

(74) Vertreter: **Obermair, Christian Egbert**
**Saint-Gobain Sekurit Deutschland GmbH & Co. KG**
**Patentabteilung**
**Glasstr.1**
**52134 Herzogenrath (DE)**

(56) Entgegenhaltungen:
EP-A1- 0 608 180    DE-A1- 3 834 075
DE-A1- 19 605 999    US-A- 5 363 114
US-A- 5 760 744    US-A1- 2006 202 898

## Beschreibung

Die Erfindung betrifft eine Fahrzeugantennenscheibe, ein Verfahren zur Herstellung der Fahrzeugantennenscheibe und deren Verwendung.

In modernen Fahrzeugen ist oftmals ein System zur Navigation mit Hilfe des globalen Navigationssatellitensystems (GNSS) integriert. In Betrieb befindliche Systeme sind beispielsweise das Global Positioning System (GPS) oder das GLObal Navigation Satellite System (GLONASS). Die dazu notwendigen Antennen können an der Karosserie und damit außerhalb des Fahrzeuginnenraums angeordnet werden, wie beispielsweise aus der US 20140176374 A1 bekannt ist. Derartige Antennen verlieren an Attraktivität, da sie das ästhetische Erscheinungsbild des Fahrzeugs beeinträchtigen, Windgeräusche verursachen können und empfindlich gegenüber Beschädigungen und Vandalismus sind.

Alternativ können GNSS-Antennen innerhalb des Fahrzeuginnenraums angeordnet werden, beispielsweise unterhalb des Armaturenbretts oder unterhalb der Windschutzscheibe. Dabei ist es schwierig eine geeignete Position mit guter Sicht der Antenne auf die GNSS-Satelliten zu finden und gleichzeitig EMC-Probleme durch elektrische Geräte im Armaturenbrett und durch den Fahrzeugmotor zu vermeiden. Des Weiteren können elektrisch leitfähige Schichten wie infrarotreflektierende Schichten oder Low-E-Schichten die Transmission elektromagnetischer Strahlung durch die Scheibe verhindern und das GNSS-Signal blockieren.

Typische GPS-Antennen werden als plane Antennen und typischerweise als Patch-Antennen realisiert und sind beispielsweise aus der WO 00/22695 A1, der DE 202006011919 U1 oder der DE 202010011837 U1 bekannt. Dabei wird eine plane metallische Antennenstruktur auf einer Seite einer Leiterplatte oder eines keramischen Träger angeordnet. Auf der gegenüberliegenden Seite wird eine plane Grundplatte als Massefläche angeordnet. Antennenstruktur und Grundplatte werden über elektrische Leitungen mit einer elektrischen Empfangseinheit verbunden. Aufgrund der Materialstärke der Leiterplatte beziehungsweise des keramischen Trägers weist die Antenne eine gewisse Dicke auf und ist bei einer Anordnung unmittelbar an der Windschutzscheibe deutlich sichtbar und wenig ästhetisch.

Fahrzeugantennenscheibenanordnungen sind aus US 5,760,744, EP 0 608 180 A1, DE 3834075 A1 und US 2006/0202898 A1 bekannt.

Die Aufgabe der vorliegenden Erfindung besteht darin, eine verbesserte Fahrzeugantennenscheibe bereitzustellen, in der eine Antenne und insbesondere eine GPS-Antenne einfach und kostengünstig integriert werden kann.

Die Aufgabe der vorliegenden Erfindung wird erfindungsgemäß durch eine Fahrzeugantennenscheibe gemäß dem unabhängigen Anspruch 1 gelöst. Bevorzugte Ausführungen gehen aus den Unteransprüchen hervor.

Die erfindungsgemäße Fahrzeugantennenscheibe umfasst mindestens die folgenden Merkmale:

- eine Innenscheibe mit einer außenseitigen Oberfläche (III) und einer innenseitigen Oberfläche (IV),
- eine Außenscheibe mit einer außenseitigen Oberfläche (I) und einer innenseitigen Oberfläche (II),
- mindestens eine Zwischenschicht, die die innenseitige Oberfläche (II) der Außenscheibe flächig mit der außenseitigen Oberfläche (III) der Innenscheibe verbindet,
- eine plane Antennenstruktur, die zwischen der Innenscheibe und der Außenscheibe angeordnet ist,
- eine Grundplatte , die innenraumseitig zur Antennenstruktur angeordnet ist,
  wobei
- zwischen der Antennenstruktur und der Grundplatte mindestens ein Dielektrikum mit relativer Permittivität $\varepsilon_r$ angeordnet ist und das Dielektrikum zumindest aus der Innenscheibe, aus der Zwischenschicht oder aus der Innenscheibe und der Zwischenschicht besteht,
- die Antennenstruktur eine Grundfläche mit einem Verhältnis von Länge $l_A$ zu Breite $b_A$ von 1:1 bis 10:1 aufweist und
- die Grundplatte zumindest im Bereich der orthogonalen Projektion der Antennenstruktur bezüglich der Innenscheibe angeordnet ist.

Die Grundplatte dient bevorzugt als Massefläche, das heißt sie ist mit der elektrischen Bezugsmasse eines Fahrzeugs verbindbar.

Die erfindungsgemäße Fahrzeugantennenscheibe ist zur Abtrennung eines Fahrzeuginnenraums von einer äußeren Umgebung geeignet. Dadurch werden die innenseitigen Oberflächen (II,IV) der Fahrzeugantennenscheibe definiert, die dem Fahrzeuginnenraum zugewandt sind, sowie die außenseitigen Oberflächen (I,III), die dem Fahrzeuginnenraum abgewandt sind.

Die Antennenstruktur ist eine plane elektrisch leitfähige Struktur oder Schicht. Sie ist zwischen der Innenscheibe und der Außenscheibe angeordnet. Die Grundplatte ist ebenfalls eine elektrisch leitfähige Struktur oder Schicht. Die Grundplatte ist ebenfalls im Wesentlichen plan. Sie ist innenraumseitig zur Antennenstruktur angeordnet. Dies bedeutet, dass die Grundplatte näher zum Fahrzeuginnenraum angeordnet ist als die Antennenstruktur.

Als Innenscheibe und Außenscheibe sind im Grunde alle elektrisch isolierenden Substrate geeignet, die unter den Bedingungen der Herstellung und der Verwendung der erfindungsgemäßen Fahrzeugantennenscheibe thermisch und chemisch stabil sowie dimensionsstabil sind.

Die Innenscheibe und/oder die Außenscheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die Innenscheibe und/oder die Außenscheibe sind bevorzugt transparent, insbesondere für die Verwendung der Fahrzeugantennenscheibe als Windschutzscheibe oder Rückscheibe eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Fahrzeugantennenscheiben, die nicht im verkehrsrelevanten Sichtfeld des Fahrers liegen, beispielsweise für Dachscheiben, kann die Transmission aber auch viel geringer sein, beispielsweise größer als oder gleich 5 %.

Die Dicke von Innenscheibe und/oder Außenscheibe kann breit variieren und so hervorragend den Erfordernissen des Einzelfalls angepasst werden. Vorzugsweise werden Standardstärken von 1,0 mm bis 25 mm, bevorzugt von 1,4 mm bis 2,5 mm, für Fahrzeugglas verwendet. Die Größe der Innenscheibe und/oder der Außenscheibe kann breit variieren und richtet sich nach der Größe der erfindungsgemäßen Verwendung. Die Innenscheibe und/oder die Außenscheibe weisen beispielsweise im Fahrzeugbau übliche Flächen von 200 cm$^2$ bis zu 3 m$^2$ auf.

Die Fahrzeugantennenscheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Innenscheibe und die Außenscheibe plan oder leicht oder stark in einer Richtung oder in mehreren Richtungen des Raumes gebogen. Insbesondere werden plane Scheiben verwendet. Die Scheiben können farblos oder gefärbt sein.

Die Innenscheibe und/oder die Außenscheibe weisen bevorzugt eine relative Permittivität $\varepsilon_{r,1/2}$ von 2 bis 8 und besonders bevorzugt von 6 bis 8 auf. Bei derartigen relativen Permittivitäten konnten besonders gute Empfangs- und Sendeeigenschaften der Antenne erzielt werden.

Die Innenscheibe und/oder die Außenscheibe werden durch mindestens eine Zwischenschicht miteinander verbunden. Die Zwischenschicht ist bevorzugt transparent. Die Zwischenschicht enthält vorzugsweise mindestens einen Kunststoff, bevorzugt Polyvinylbutyral (PVB), Ethylenvinylacetat (EVA) und / oder Polyethylenterephthalat (PET). Die Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten. Die Zwischenschicht kann durch eine oder auch durch mehrere übereinander oder nebeneinander angeordnete Folien ausgebildet werden, wobei die Dicke einer Folie bevorzugt von 0,025 mm bis 1 mm beträgt, typischerweise 0,38 mm oder 0,76 mm. Die Zwischenschichten können bevorzugt thermoplastisch sein und nach der Lamination die Innenscheibe und die Außenscheibe und eventuelle weitere Zwischenschichten miteinander verkleben.

Die Zwischenschicht hat bevorzugt eine relative Permittivität $\varepsilon_{r,3}$ von 2 bis 4 und besonders bevorzugt von 2,1 bis 2,9. Bei derartigen relativen Permittivitäten konnten besonders gute Antenneneigenschaften erzielt werden.

Zwischen der Antennenstruktur und der Grundplatte ist mindestens ein Dielektrikum mit einer relativen Permittivität $\varepsilon_r$ angeordnet. Da die Antennenstruktur zwischen Innenscheibe und Außenscheibe angeordnet ist, ergeben sich drei bevorzugte Konstellationen:
Die Antennenstruktur ist zwischen Außenscheibe und Zwischenschicht angeordnet. Die Grundplatte kann dann zwischen Zwischenschicht und Innenscheibe oder auf der innenseitigen Oberfläche (IV) der Innenscheibe angeordnet sein. Im ersten Falle enthält das zwischen der Antennenstruktur und der Grundplatte angeordnete Dielektrikum die Zwischenschicht oder besteht daraus; im zweiten Fall enthält das Dielektrikum die Zwischenschicht und die Innenscheibe oder besteht daraus.

Alternativ kann die Antennenstruktur zwischen der Zwischenschicht und der Innenscheibe angeordnet sein. Die Grundplatte ist dann auf der innenseitigen Oberfläche (IV) der Innenscheibe angeordnet. In diesem Falle enthält das Dielektrikum die Innenscheibe oder besteht daraus.

In allen Fällen ist die Grundplatte zumindest im Bereich der orthogonalen Projektion der Antennenstruktur bezüglich der Innenscheibe angeordnet. Das bedeutet, dass beim Blick durch die Fahrzeugantennenscheibe vom Fahrzeuginnenraum, also auf die innenseitige Oberfläche (IV) der Fahrzeugantennenscheibe, nur die Grundplatte sichtbar ist und die Grundplatte die Sicht auf die Antennenstruktur vollständig verdeckt.

In einer vorteilhaften Ausgestaltung der Erfindung ist die Fläche der Grundplatte größer als die Fläche der Antennenstruktur, bevorzugt um mindestens 10% größer und besonders bevorzugt um mindestens 25% größer. In einer weiteren vorteilhaften Ausgestaltung der Erfindung überragt die Grundplatte in der orthogonalen Projektion der Antennenstruktur den Umfang der Antennenstruktur um jeweils mindestens 2 mm, bevorzugt um mindestens 5 mm und insbesondere um mindestens 10 mm.

Die Antennenstruktur weist eine Grundfläche mit einem Verhältnis von Länge $l_A$ zu Breite $b_A$ von 1:1 bis 10:1, bevorzugt von 1:1 bis 2:1 und besonders bevorzugt von 1:1 bis 1,1:1 auf. Die Grundfläche der Antennenstruktur ist bevorzugt ein Rechteck, ein Quadrat, ein Trapez, eine Vieleck mit mehr als vier Ecken, eine Ellipse oder ein Kreis. Im Falle eines Rechtecks entspricht die Länge $l_A$ der Länge der längeren Seite des Rechtecks und die Breite $b_A$ der Länge der kürzeren Seite des Rechtecks. Im Falle einer quadratischen oder im Wesentlichen quadratischen Grundfläche mit gleich großen Seitenlängen weisen die Länge $l_A$ und die Breite $b_A$ folglich ein Verhältnis von 1:1 auf. Im Falle einer nicht rechteckigen und insbesondere einer elliptischen Struktur wird die Länge $l_A$ durch die maximale Länge der Struktur und die Breite $b_A$ durch die Länge der zur Länge $l_A$ orthogonal verlaufenden Richtung festgelegt. Im Falle einer kreisförmigen Grundfläche weisen die Länge $l_A$ und die Breite $b_A$ ein Verhältnis von 1:1 auf.

Insbesondere bei rechteckigen oder quadratischen Grundflächen, kann im Rahmen der vorliegenden Erfindung eine, bevorzugt zwei diagonal einander gegenüberliegende Ecken, und besonders bevorzugt alle Ecken, abgeschrägt sein. Damit lässt sich die Antennenstruktur in vorteilhafter Weise auf die zu empfangende elektromagnetische Strahlung abstimmen. Die Abschrägung beträgt vorteilhafterweise weniger als 20% der Länge $l_A$ und/oder der Breite $b_A$, bevorzugt weniger als 10%.

Die Abmessungen der Antennenstruktur sind im Allgemeinen von dem gewünschten Frequenzband und der jeweiligen Verwendung abhängig. Für Mobilfunkanwendungen im Frequenzbereich von 0,8 GHz bis 2,7 GHz weist die Antennenstruktur typischerweise eine Länge $l_A$ und/oder eine Breite $b_A$ von 20 mm bis 60 mm auf. Für Anwendungen zur satellitengestützten Navigation (GNSS) im Frequenzbereich von 1,2 GHz bis 1,7 GHz weist die Antennenstruktur typischerweise eine Länge $l_A$ und/oder eine Breite $b_A$ von 30 mm bis 40 mm auf.

In einer vorteilhaften Ausgestaltung der Erfindung ist die Antennenstruktur auf ein GPS-Signal mit einer Frequenz von 1575,42 MHz und einer rechts-zirkularpolarisierten elektromagnetischen Schwingungsebene optimiert. Dazu weist die Antennenstruktur eine rechteckige Grundfläche mit einer Länge $l_A$ von 36 mm und einer Breite $b_A$ von 34 mm und folglich einem Verhältnis von etwa 1,06:1 auf.

Die Antennenstruktur kann vorteilhafterweise weitere Ausnehmungen aufweisen. Besonders vorteilhaft ist dabei eine schlitzförmige Ausnehmung. Bei einer rechteckförmigen oder quadratischen Grundfläche der Antennenstruktur ist die längere Seite der schlitzförmigen Ausnehmung bevorzugt parallel zu und insbesondere entlang der Diagonalen der Grundfläche ausgerichtet. Die schlitzförmige Ausnehmung hat beispielsweise eine rechteckige Form, vorteilhafterweise mit einer Länge $l_S$ von 5 mm bis 20 mm, bevorzugt von 7,5 mm bis 12,5 mm, und einer Breite $b_S$ von 0,5 mm bis 5,0 mm, bevorzugt von 0,9 mm bis 3,1 mm.

Des Weiteren kann die Antennenstruktur rechteckförmige Ausnehmungen aufweisen, die an beiden Seiten der elektrischen Leitungsverbindung zwischen Antennenstruktur und Signalleitung in der Grundfläche der Antennenstruktur angeordnet sind. Diese haben den besonderen Vorteil, dass sie eine besonders gute Ein- oder Auskopplung des Antennensignals in oder aus der Antennenstruktur ermöglichen, das dann über die Signalleitung einer Sende- oder Empfangselektronik zugeführt wird.

In einer vorteilhaften Ausgestaltung der Erfindung besteht die Antennenstruktur und/oder die Grundplatte aus einer gedruckten und eingebrannten elektrisch leitfähigen Paste, bevorzugt eine silberhaltige Siebdruckpaste. Die gedruckte und eingebrannte elektrisch leitfähigen Paste hat vorteilhafterweise eine Dicke von 3 $\mu$m bis 20 $\mu$m und einen Flächenwiderstand von 0,001 Ohm/Quadrat bis 0,03 Ohm/Quadrat, bevorzugt von 0,002 Ohm/Quadrat bis 0,018 Ohm/Quadrat. Derartige Antennenstrukturen und Grundplatten sind im industriellen Fertigungsprozess leicht zu integrieren und kostengünstig herzustellen.

In einer weiteren vorteilhaften Ausgestaltung der Erfindung besteht die Antennenstruktur und/oder die Grundplatte aus einer elektrisch leitfähigen Folie, bevorzugt einer Metallfolie und insbesondere einer Kupfer-, Silber-, Gold- oder Aluminiumfolie. Es versteht sich, dass derartige Folien auch auf Trägerfolien, beispielsweise polymeren Trägerfolien wie Polyimid oder Polyethylenterephthalat (PET), angeordnet sein können. Derartige Antennenstrukturen und Grundplatten auf Trägerfolien sind besonders vorteilhaft, da die gesamte Antennenstruktur mit Grundplatte aus einer Einheit hergestellt werden kann und während der Fertigung bequem und positionsgenau in die spätere Fahrzeugantennenscheibe eingelegt werden können.

In einer weiteren vorteilhaften Ausgestaltung der Erfindung besteht die Antennenstruktur und/oder die Grundplatte aus einer elektrisch leitfähigen Struktur, die aus einer elektrisch leitfähigen Schicht durch einen beschichtungsfreien Trennbereich, insbesondere eine beschichtungsfreie Trennlinie, von der umgebenden Schicht elektrisch isoliert ist. In einer alternativen Ausgestaltung der Erfindung ist der Trennbereich nicht vollständig beschichtungsfrei sondern durch eine Vielzahl sich kreuzender Trennlinien in kleine, elektrisch voneinander isolierte Bereiche unterteilt, was im Folgenden auch Raster genannt wird. Die Dimensionen des Rasters sind so gewählt, dass die verbleibende elektrisch leitfähige Schicht nicht mit der eintreffenden hochfrequenten elektromagnetischen Strahlung wechselwirkt. Typischerweise beträgt der maximale Abstand zweier benachbarter Trennlinien kleiner oder gleich 3 mm.

Die Breite des Trennbereichs ist für vollständig beschichtungsfreie Trennbereiche und gerasterte Trennbereich größer oder gleich 5 mm, bevorzugt größer oder gleich $\lambda / \sqrt{\varepsilon_{eff}}$, wobei $\lambda$ die Wellenlänge der elektromagnetischen Strahlung ist, für die die Antennenstruktur optimiert ist und $\varepsilon_{eff}$ die effektive Permittivität des die Antennenstruktur und/oder die Grundplatte umschließenden Dielektrikums ist. Für eine auf GNSS-Systeme optimierte Antennenstruktur beträgt die Breite von 50 mm bis 90 mm und insbesondere etwa 70 mm.

Derartige Antennenstrukturen und Grundplatten sind besonders vorteilhaft wenn bereits elektrisch leitfähige Schichten in der Scheibe angeordnet sind, wie es beispielsweise bei elektrisch beheizbaren Scheiben und Scheiben mit integriertem Filter für Sonneneinstrahlung üblich ist. Hier kann der insgesamt beschichtungsfreie Trennbereich oder die Rasterung der elektrisch leitfähigen Schicht minimal gewählt werden ohne die Anzahl der sichtbaren Satelliten (bzw. ohne den Raumwinkel der Antenne) effektiv einzuschränken, im Gegensatz zu Antennen die in der Instrumententafel integriert sind.

In einer vorteilhaften Ausgestaltung der erfindungsgemäßen Fahrzeugantennenscheibe, beträgt die Breite der Trennlinien von 30 $\mu$m bis 200 $\mu$m und bevorzugt von 70 $\mu$m bis 140 $\mu$m. Derartig dünne Trennlinien erlauben eine sichere und ausreichend hohe elektrische Isolierung und stören gleichzeitig die Durchsicht durch die Fahrzeugantennenscheibe nicht oder nur geringfügig.

Erfindungsgemäße elektrisch leitfähige Schichten sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und oder Chrom, oder eine Metalllegierung. Die funktionellen Schichten enthalten besonders bevorzugt mindestens 90 Gew. % des Metalls, insbesondere mindestens 99,9 Gew. % des Metalls. Die funktionellen Schichten können aus dem Metall oder der Metalllegierung bestehen. Die funktionellen Schichten enthalten besonders bevorzugt Silber oder eine silberhaltige Legierung. Solche funktionelle Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten zumindest eine dielektrische Schicht angeordnet. Bevorzugt ist unterhalb der ersten und/oder oberhalb der letzten funktionellen Schicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Die dielektrischen Schichten können jeweils aber auch mehrere Einzelschichten umfassen, beispielsweise Einzelschichten eines einem dielektrischen Material, Glättungsschichten, Anpassungsschichten, Blockerschichten und / oder Antireflexionsschichten. Die Dicke einer dielektrischen Schicht beträgt beispielsweise von 10 nm bis 200 nm.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt werden.

Weitere geeignete elektrisch leitfähige Schichten enthalten bevorzugt Indium-Zinnoxid (ITO), fluordotiertes Zinnoxid (SnO$_2$:F) oder aluminiumdotiertes Zinkoxid (ZnO:Al).

Die elektrisch leitfähige Schicht kann prinzipiell jede Beschichtung sein, die elektrisch kontaktiert werden kann. Soll die erfindungsgemäße Scheibe die Durchsicht ermöglichen, wie es beispielsweise bei Scheiben im Fensterbereich der Fall ist, so ist die elektrisch leitfähige Schicht bevorzugt transparent. In einer vorteilhaften Ausgestaltung ist die elektrisch leitfähige Schicht eine Schicht oder ein Schichtaufbau mehrerer Einzelschichten mit einer Gesamtdicke von kleiner oder gleich 2 $\mu$m, besonders bevorzugt kleiner oder gleich 1 $\mu$m.

Eine vorteilhafte erfindungsgemäße transparente elektrisch leitfähige Schicht weist einen Flächenwiderstand von 0,4 Ohm/Quadrat bis 200 Ohm/Quadrat auf. In einer besonders bevorzugten Ausgestaltung weist die erfindungsgemäße elektrisch leitfähige Schicht einen Flächenwiderstand von 0,5 Ohm/Quadrat bis 20 Ohm/Quadrat auf. Beschichtungen mit derartigen Flächenwiderständen eignen sich besonders zur Beheizung von Fahrzeugscheiben bei typischen Bordspannungen von 12 V bis 48 Volt oder bei Elektrofahrzeugen mit typischen Bordspannungen von bis zu 500 V.

In einer vorteilhaften Ausgestaltung einer erfindungsgemäßen Verbundscheibe ist die elektrisch leitfähige Schicht um eine Breite von 2 mm bis 50 mm, bevorzugt von 5 mm bis 20 mm vom Rand der Verbundscheibe entfernt angeordnet. Die elektrisch leitfähige Schicht weist dann keinen Kontakt zur Atmosphäre auf und ist im Inneren der Fahrzeugantennenscheibe durch die Zwischenschichten vorteilhaft vor Beschädigungen und Korrosion geschützt.

Die elektrisch leitfähige Schicht enthält bevorzugt eine transparente, elektrisch leitfähige Beschichtung. Transparent bedeutet hier durchlässig für elektromagnetische Strahlung einer Wellenlänge von 300 nm bis 1.300 nm und insbesondere für sichtbares Licht.

Falls es nicht erforderlich, dass die elektrisch leitfähige Schicht transparent ausgestaltet ist, weil die Antennenstruktur und/oder die Grundplatte in einem Bereich der Fahrzeugantennenscheibe angeordnet ist, in dem beispielsweise die Durchsicht durch einen Abdeckdruck oder eine Kunststoffgehäuse verhindert ist, kann die elektrisch leitfähige Schicht auch deutlich dicker als bei transparenten elektrisch leitfähigen Schichten ausgestaltet sein. Derartige dickere Schichten können einen deutlich niedrigen Flächenwiderstand aufweisen. Vorteilhaft wäre beispielsweise eine elektrisch leitfähige Folie, bevorzugt eine Metallfolie und insbesondere eine Kupfer-, Silber-, Gold- oder Aluminiumfolie. Die elektrisch leitfähige Folie weist vorteilhafterweise eine Dicke von 50 $\mu$m bis 1000 $\mu$m und bevorzugt von 100 $\mu$m bis 600 $\mu$m auf. Die elektrisch leitfähige Folie hat vorteilhafterweise eine Leitfähigkeit von 1*10$^6$ S/m bis 10*10$^7$ S/m und bevorzugt von 3,5*10$^7$ S/m bis 6,5*10$^7$ S/m.

Es versteht sich, dass die Antennenstruktur und die Grundplatte aus den genannten Ausgestaltungformen, wie gedruckte Paste, elektrisch leitfähige Folie und abgetrennte elektrisch leitfähige Schicht, miteinander kombiniert werden können. Das heißt, dass die Antennenstruktur beispielsweise aus einer elektrisch leitfähigen Folie und die Grundplatte aus einer gedruckten Paste besteht, usw.

In einer vorteilhaften Ausgestaltung der erfindungsgemäßen Fahrzeugantennenscheibe sind die Antennenstruktur und die Grundplatte am äußeren Rand der Scheibe angeordnet. Dabei beträgt der maximale Abstand zum äußeren Rand bevorzugt weniger als 20 cm, besonders bevorzugt weniger als 10 cm. Dies erlaubt es die Antennenstruktur, die Grundplatte und Zuleitungen unter einem optisch unauffälligen Schwarzdruck oder mit einer Abdeckung, beispielsweise einem Kameragehäuse zu kaschieren.

In der erfindungsgemäßen Fahrzeugantennenscheibe ist der Antennenfußpunkt der Antennenstruktur über einen Flachleiter zum Rand der Fahrzeugantennenscheibe und aus dieser herausgeführt. Dabei ist der Flachleiter zumindest in einem Bereich, der benachbart zu einer Fahrzeugkarosserie angeordnet werden kann, als Streifenleiter und bevorzugt als koplanarer Streifenleiter ausgebildet, dessen Signalleitung mit der Antennenstruktur elektrisch leitend gekoppelt ist und dessen Schirmung mit der Grundplatte elektrisch leitend gekoppelt ist. Elektrisch leitend gekoppelt bedeutet hier bevorzugt galvanisch gekoppelt. Alternativ kann die Kopplung auch kapazitiv sein.

In einer weiteren vorteilhaften Ausgestaltung der erfindungsgemäßen Fahrzeugantennenscheibe ist die Antennenstruktur und die Signalleitung des Streifenleiters und/oder die Grundplatte und die Schirmung des Streifenleiters einstückig ausgebildet. Dies vermeidet Leitungsverluste bei Übergängen zwischen verschiedenen Abschnitten der Antenne. Des Weiteren ist eine solche einstückige Struktur besonders einfach herzustellen, wenn die jeweiligen Elemente auf einer gemeinsamen Trägerfolie angeordnet sind.

Der Streifenleiter ist bevorzugt als Folienleiter oder flexibler Folienleiter (Flachleiter, Flachbandleiter) ausgebildet. Unter Folienleiter wird ein elektrischer Leiter verstanden, dessen Breite deutlich größer ist als seine Dicke. Ein solcher Folienleiter ist beispielsweise ein Streifen oder Band enthaltend oder bestehend aus Kupfer, verzinntem Kupfer, Aluminium, Silber, Gold oder Legierungen davon. Der Folienleiter weist beispielsweise eine Breite von 2 mm bis 16 mm und eine Dicke von 0,03 mm bis 0,1 mm auf. Der Folienleiter kann eine isolierende, bevorzugt polymere Ummantelung, beispielsweise auf Polyimid-Basis aufweisen. Folienleiter, die sich zur Kontaktierung von elektrisch leitfähigen Beschichtungen in Scheiben eignen, weisen lediglich eine Gesamtdicke von beispielsweise 0,3 mm auf. Derart dünne Folienleiter können ohne Schwierigkeiten zwischen den einzelnen Scheiben in der thermoplastischen Zwischenschicht eingebettet werden. In einem Folienleiterband können sich mehrere voneinander elektrisch isolierte, leitfähige Schichten befinden.

Alternativ können auch dünne Metalldrähte als elektrische Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

Die elektrische Leitungsverbindung zwischen der Antennenstruktur und der elektrischen Zuleitung und/oder der Grundplatte und der Massenzuleitung beziehungsweise Schirmung erfolgt bevorzugt über elektrisch leitfähige Kleber oder über eine Lotverbindung, die eine sichere und dauerhaft elektrische Leitungsverbindung zwischen Anschlussbereich und Zuleitung ermöglichen. Alternativ kann die elektrische Leitungsverbindung auch durch Klemmen erfolgen, da die Klemmverbindung durch den Laminiervorgang verrutschtungssicher fixiert wird. Alternativ kann die Zuleitung auch auf den Anschlussbereich überlappend aufgedruckt werden, beispielsweise mittels einer metallhaltigen und insbesondere silberhaltigen, elektrisch leitfähigen Druckpaste. Alternativ kann die elektrische Leitungsverbindung auch durch Löten hergestellt werden.

In einer Ausgestaltung einer nicht erfindungsgemäßen Fahrzeugantennenscheibe weist die Grundplatte einen Massebereich und einen kapazitiven Kopplungsbereich zur kapazitiven Auskopplung des Antennensignals auf. Dabei wird das Antennensignal kapazitiv mit einem kapazitiven Kopplungsbereich in der Ebene der Grundplatte durch das Dielektrikum zwischen Antennenstruktur und Grundplattenebene gekoppelt. Der kapazitive Kopplungsbereich ist dann mit einem Bereich der Signalleitung des Folienleiters verbunden oder mit diesem identisch. Die ist besonders vorteilhaft, da die elektrischen Zuleitungen für das Antennensignal und die Masse beziehungsweise Schirmung auf einer Ebene mit einem einzigen Streifenleiter in einfacher Weise hergestellt werden können. Die Antennenstruktur im Innern der Fahrzeugantennenscheibe muss nicht gesondert kontaktiert werden und es muss kein gesonderter Leiter aus der Fahrzeugantennenscheibe herausgeführt werden, was Abdichtungs- und Korrosionsprobleme am Scheibenrand vermindert.

In einer weiteren vorteilhaften Ausgestaltung der erfindungsgemäßen Fahrzeugantennenscheibe besteht die Zwischenschicht im unmittelbaren Bereich zwischen der Antennenstruktur und der Grundplatte aus einem Dielektrikum mit einer relativen Permittivität $\varepsilon_{r,3'}$ welche größer ist als die relative Permittivität $\varepsilon_{r,3}$ des Dielektrikums der Zwischenschicht im umgebenden Bereich. Bevorzugt ist $\varepsilon_{r,3'} > 3* \varepsilon_{r,3}$. Dies hat den besonderen Vorteil, dass die Empfangs- und Sendeeigenschaften der Antenne leichter an die jeweiligen Erfordernisse angepasst werden können.

In einer weiteren vorteilhaften Ausgestaltung der erfindungsgemäßen Fahrzeugantennenscheibe ist die Antennenstruktur, der Flachleiter und/oder die Grundplatte auf einer Trägerfolie angeordnet. Die Trägerfolie enthält bevorzugt ein Polymer und enthält besonders bevorzugt Polyimid oder Polyethylenterephthalat (PET) oder besteht daraus. Die Trägerfolie weist eine relative Permittivität von 2 bis 4 und besonders bevorzugt von 2,7 bis 3,3 auf. Je nach Anordnung der Trägerfolie relativ zur Antennenstruktur und Grundplatte kann die Trägerfolie auch als zwischenliegendes Dielektrikum dienen und gezielt die Antenneneigenschaften mitbestimmen.

Die Erfindung bezieht sich auch auf eine Fahrzeugantennenscheibenanordnung, welche eine wie oben beschrieben ausgebildete, erfindungsgemäße Fahrzeugantennenscheibe sowie eine Empfangs- oder Sendeelektronik, die mit der Antennenstruktur und der Grundplatte elektrisch gekoppelt ist, umfasst. Hierbei ist die Fahrzeugantennenscheibe als Verglasung in einer Fahrzeugkarosserie eines Fahrzeugs angeordnet. Die Grundplatte dient bevorzugt als Massefläche, wobei die Grundplatte in diesem Fall mit einer elektrischen Bezugsmasse des Fahrzeugs verbunden ist.

Die oben beschriebenen, verschiedenen Ausgestaltungen und Ausführungsformen der erfindungsgemäßen Fahrzeugantennenscheibe können in Alleinstellung oder in beliebiger Kombination realisiert sein.

Ein weiterer Aspekt der Erfindung umfasst ein Verfahren zur Herstellung einer Fahrzeugantennenscheibe, insbesondere einer wie oben beschrieben ausgebildeten, erfindungsgemäßen Fahrzeugantennenscheibe, mindestens umfassend:

(a) Herstellen einer Stapelfolge aus einer Innenscheibe, mindestens einer Zwischenschicht und einer Außenscheibe, wobei eine plane Antennenstruktur zwischen der Innenscheibe und der Außenscheibe angeordnet wird und eine Grundplatte innenraumseitig zur Antennenstruktur angeordnet wird und

(b) Laminieren der Stapelfolge zu einer Fahrzeugantennenscheibe.

Das Laminieren, also das Verbinden von Innenscheibe und Außenscheibe über die Zwischenschicht in Verfahrensschritt (b) erfolgt bevorzugt unter Einwirkung von Hitze, Vakuum und/oder Druck. Es können an sich bekannte Verfahren zur Herstellung einer Verbundscheibe verwendet werden.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80 °C bis 110 °C. Die Innenscheibe, die thermoplastische Zwischenschicht und die Außenscheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Innenscheibe und die Außenscheibe innerhalb von beispielsweise etwa 60 Minuten bei verminderten Drücken von 0,01 mbar bis 800 mbar und Temperaturen von 80°C bis 170°C laminiert werden.

Ein weiterer Aspekt der Erfindung umfasst die Verwendung der erfindungsgemäßen Fahrzeugantennenscheibe in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und / oder Dachscheibe.

Die Erfindung umfasst weiter die Verwendung der erfindungsgemäßen Fahrzeugantennenscheibe zum Empfang von GPS-Signalen zur satellitengestützten Navigation.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:

| Figur 1A | eine Draufsicht auf eine Ausgestaltung einer erfindungsgemäßen Fahrzeugantennenscheibe, |
|---|---|
| Figur 1B | eine vergrößerte Darstellung des Ausschnitts Z aus Figur 1A, |
| Figur 1C | eine Querschnittsdarstellung entlang der Schnittlinie A-A' aus Figur 1B, |
| Figur 1D | eine Querschnittsdarstellung entlang der Schnittlinie B-B' aus Figur 1B, |
| Figur 1E | eine Querschnittsdarstellung entlang der Schnittlinie C-C' aus Figur 1B, |
| Figur 2A | eine Querschnittsdarstellung entlang der Schnittlinie A-A' eines alternativen Ausgestaltungsbeispiels nach Figur 1B, |
| Figur 2B | eine Querschnittsdarstellung entlang der Schnittlinie B-B' eines alternativen Ausgestaltungsbeispiels nach Figur 1B, |
| Figur 3A | eine Querschnittsdarstellung entlang der Schnittlinie A-A' eines weiteren alternativen Ausgestaltungsbeispiels nach Figur 1B, |
| Figur 3B | eine Querschnittsdarstellung entlang der Schnittlinie B-B' eines weiteren alternativen Ausgestaltungsbeispiels nach Figur 1B, |
| Figur 4A | eine Draufsicht auf eine weitere alternative Ausgestaltung einer erfindungsgemäßen Fahrzeugantennenscheibe, |
| Figur 4B | eine vergrößerte Darstellung des Aus- |

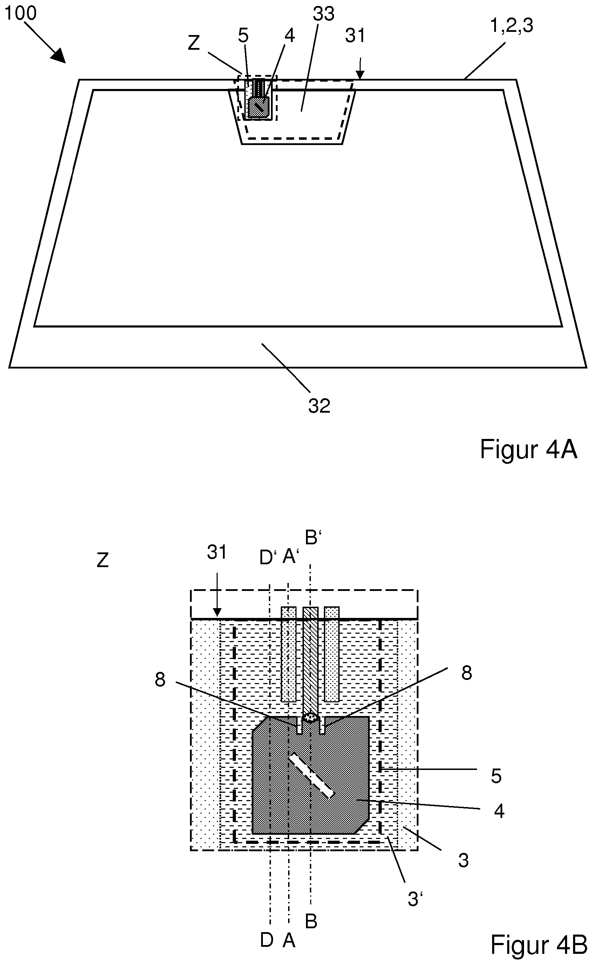

schnitts Z aus Figur 4A,

Figur 4C     eine Querschnittsdarstellung entlang der Schnittlinie A-A' aus Figur 4B,

Figur 4D     eine Querschnittsdarstellung entlang der Schnittlinie B-B' aus Figur 4B,

Figur 4E     eine Querschnittsdarstellung entlang der Schnittlinie D-D' aus Figur 4B,

Figur 5     eine vergrößerte Darstellung eines Ausschnitts Z aus Figur 4A mit einer alternativen Ausgestaltung einer erfindungsgemäßen Antennenstruktur,

Figur 6A     eine Draufsicht auf eine Ausgestaltung einer nicht erfindungsgemäßen Fahrzeugantennenscheibe,

Figur 6B     eine vergrößerte Darstellung des Ausschnitts Z aus Figur 6A,

Figur 6C     eine Querschnittsdarstellung entlang der Schnittlinie A-A' aus Figur 6B,

Figur 6D     eine Querschnittsdarstellung entlang der Schnittlinie B-B' aus Figur 6B;

Figur 7     ein detailliertes Flussdiagramm einer Ausführungsform des erfindungsgemäßen Verfahrens;

Figur 8     eine Messung des sogenannten $S_{11}$-Parameters an einer erfindungsgemäßen Fahrzeugantennenscheibe.

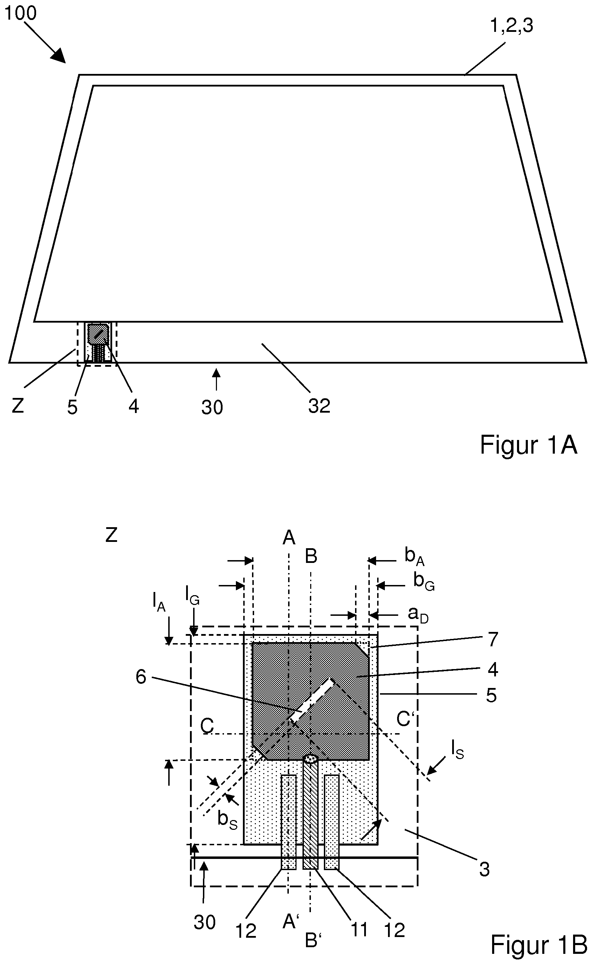

Figur 1A zeigt eine Draufsicht auf eine beispielhafte Ausgestaltung einer erfindungsgemäßen Fahrzeugantennenscheibe 100.

Figur 1B zeigt eine vergrößerte Darstellung des Ausschnitts Z der erfindungsgemäßen Fahrzeugantennenscheibe 100 aus Figur 1A. Die Fahrzeugantennenscheibe 100 umfasst hier beispielsweise eine Innenscheibe 1 und eine Außenscheibe 2, die über eine Zwischenschicht 3 miteinander verbunden sind. Die Fahrzeugantennenscheibe 100 ist beispielsweise die Windschutzscheibe eines Personenkraftwagens. Die Abmessungen der Fahrzeugantennenscheibe 100 betragen beispielsweise 0,9 m x 1,5 m.

Die Innenscheibe 1 ist beispielsweise dafür vorgesehen, in Einbaulage dem Innenraum zugewandt zu sein. Das heißt, die innenseitige Oberfläche IV der Innenscheibe 1 ist vom Innenraum aus zugänglich, wogegen die außenseitige Oberfläche I der Außenscheibe 2 bezüglich des Fahrzeuginnenraums nach außen weist. Innenscheibe 1 und Außenscheibe 2 bestehen beispielsweise aus Natron-Kalkglas. Die Dicke der Innenscheibe 1 beträgt beispielsweise 1,6 mm und die Dicke der Außenscheibe 2 beträgt 2,1 mm. Es versteht sich, dass Innenscheibe 1 und Außenscheibe 2 beispielsweise auch gleich dick ausgebildet sein können. Die Zwischenschicht 3 ist eine thermoplastische Zwischenschicht und besteht beispielsweise aus Polyvinylbutyral (PVB). Sie weist eine Dicke von 0,76 mm auf.

Die dargestellte Ansicht ist eine Draufsicht auf die außenseitige Oberfläche I der Außenscheibe 2 von außerhalb des Fahrzeugs aus betrachtet.

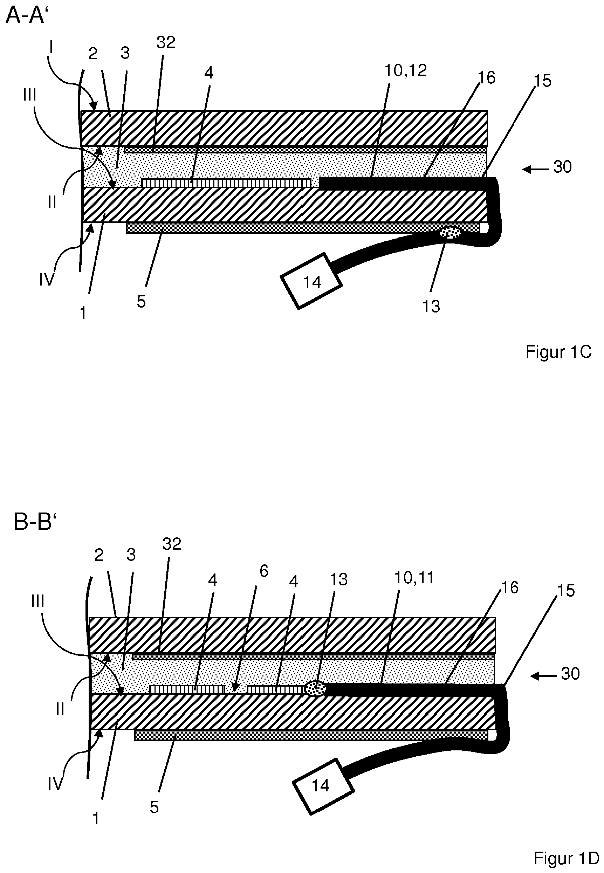

In Figur 1C ist eine Querschnittsdarstellung entlang der Schnittlinie A-A' aus Figur 1B dargestellt. Figur 1D zeigt eine dazugehörige Querschnittsdarstellung entlang der Schnittlinie B-B' aus Figur 1B.

Die Antennenstruktur 4 und die Grundplatte 5 sind am unteren Scheibenrand 30 der Fahrzeugantennenscheibe 100 angeordnet. Die Antennenstruktur 4 besteht in diesem Beispiel aus einer 0,1 mm dicken Kupferfolie, die auf der außenseitigen Oberfläche III der Innenscheibe 1 angeordnet ist. Die Antennenstruktur 4 besteht in diesem Beispiel aus einer rechteckigen Grundfläche mit einer Länge $l_A$ von 36 mm und einer Breite $b_A$ von ebenfalls 34 mm. Die Grundfläche der Antennenstruktur 4 weist an zwei gegenüberliegenden Ecken jeweils eine dreiecksförmige Ausnehmung 7 auf, bei der jeweils eine der Ecken des Quadrats ausgenommen ist. Die dreiecksförmige Ausnehmung 7 ist beispielsweise ein gleichschenkliges, rechteckiges Dreieck mit einer Kathetenlänge von $a_D = 2{,}5$ mm. Die Antennenstruktur 4 weist zusätzlich eine schlitzförmige Ausnehmung 6 mit einer rechteckigen Form und mit einer Länge $l_S$ von 9,5 mm und einer Breite $b_S$ von 3 mm auf. Die schlitzförmige Ausnehmung 6 ist mit ihrer Länge entlang der Diagonalen der quadratischen Grundfläche angeordnet, an der sich die dreiecksförmigen Ausnehmungen 7 befinden.

Die Antennenstruktur 4 ist über eine elektrische Leitungsverbindung 13 mit der Signalleitung 11 eines Folienleiters 10 verbunden. Die elektrische Leitungsverbindung 13 ist beispielsweise eine Lötstelle oder ein elektrisch leitfähiger Kleber. Der Folienleiter 10 ist zumindest im Bereich des Scheibenrandes 30 und hier beispielsweise über seine volle Länge als koplanarer Streifenleiter ausgebildet. Das heißt die plane Signalleitung 11 ist von zwei in einer Ebene zur Signalleitung 11 angeordneten planen Schirmungen 12 oder Schirmungsleitern umgeben. Der Folienleiter 10 besteht also aus drei Innenleitern 15, nämlich der Signalleitung 11 und zwei Schirmungen 12, die beispielsweise einseitig und bevorzugt beidseitig von einer elektrischen Isolation 16 umgeben sind. Die elektrische Isolation 16 ist beispielsweise eine Polymer-Folie und insbesondere eine Polyimid-Folie. Der Innenleiter 15 ist beispielsweise eine Aluminiumfolie mit einer Breite von 4 mm und einer Dicke von 200 $\mu$m. Der Folienleiter 10 ist um den Scheibenrand 30 herumgeführt. Die zwei Schirmungen 12 sind auf der innenseitigen Oberfläche IV der Innenscheibe 1 mit der Grundplatte 5 über eine elektrische Leitungsverbindung 13 elektrisch verbunden. Die elektrische Leitungsverbindung 13 ist beispielsweise eine Lötstelle oder ein elektrisch leitfähiger Kleber. Des Weiteren weist der Folienleiter 10 ein Anschlusselement 14 auf, beispielsweise einen koaxialen SMA (Sub-Miniature-A) Stecker zur Verbindung mit einer Empfangs- oder Sendeelektronik und hier insbesondere einer GPS-Empfangselektronik.

Die Grundplatte 5 hat eine rechteckförmige Grundfläche mit einer Breite $b_G$ von 6 cm und einer Länge $l_G$ von 13 cm. Die Grundplatte 5 überragt dabei den Bereich der orthogonalen Projektion der Antennenstruktur

4 bezüglich der Innenscheibe 1. Die Grundplatte 5 ist um einen Abstand von etwa 20 mm vom Scheibenrand 30 ins Scheibeninnere versetzt.

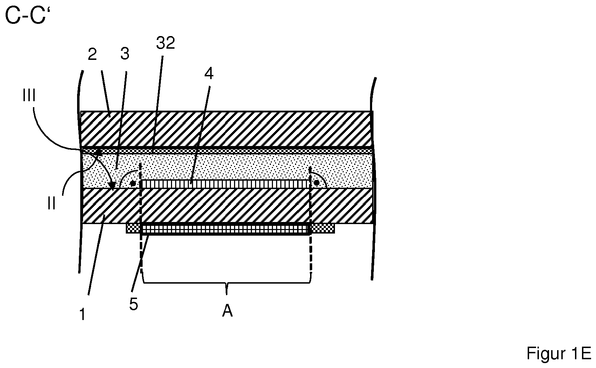

Figur 1E zeigt eine Querschnittsdarstellung entlang der Schnittlinie C-C' aus Figur 1B. Die orthogonale Projektion der Antennenstruktur 4 erstreckt sich über die Fläche A auf der innenseitigen Oberfläche IV der Innenscheibe 1. Die Grundplatte 5 überragt die Fläche A der orthogonalen Projektion der Antennenstruktur 4 vollständig.

Die quadratische Grundfläche der Antennenstruktur 4 ist mit einer Seitenkante parallel zum Scheibenrand 30 angeordnet. Es versteht sich, dass die Seitenkante auch einen gewissen Winkel zum Scheibenrand 30 aufweisen kann, beispielsweise 45°. Die Signalleitung 11 ist an der zum Seitenrand 30 unmittelbar benachbarten Seitenkante der Antennenstruktur 4 mit der Antennenstruktur 4 verbunden. Die schlitzförmige Ausnehmung 6 und die Diagonale mit den dreiecksförmigen Ausnehmungen 7 verlaufen vom Anschlusspunkt des Signalleiters 11 aus gesehen von links unten nach rechts oben.

Die dargestellte Antennenstruktur 4 ist dazu geeignet ein rechts-zirkular polarisiertes GPS-Signal mit einer L1-Frequenz von 1575,42 MHz zu empfangen. Die dargestellte Antennenstruktur 4 ist gleichwohl dazu geeignet einen guten GLONASS-Empfang zu erzielen.

Die Antennenstruktur 4 und die Grundplatte 5 sind in einem Bereich der Fahrzeugantennenscheibe 100 angeordnet, in dem auf der innenseitigen Oberfläche II der Außenscheibe 2 ein Abdeckdruck 32 in Form eines Schwarzdrucks angeordnet ist. Der Abdeckdruck 32 ist undurchlässig für sichtbares Licht und verhindert die Durchsicht auf die Einklebung der Fahrzeugantennenscheibe 100 in eine Fahrzeugkarosserie beziehungsweise auf die Antennenstruktur 4 oder die Grundplatte 5. Der Abdeckdruck 32 ist durchlässig für elektromagnetische Strahlung im Frequenzbereich der Antenne, die durch die Antennenstruktur 4 und die Grundplatte 5 gebildet wird. Die Wirkung der Antenne wird durch den Abdeckdruck 32 nicht oder nicht wesentlich beeinflusst.

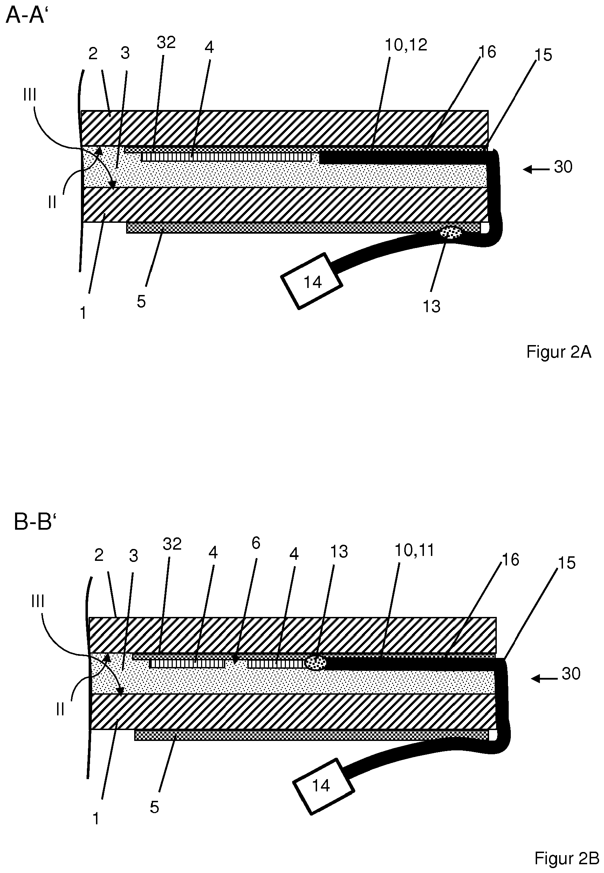

Figur 2A zeigt eine Querschnittsdarstellung entlang der Schnittlinie A-A' eines alternativen Ausgestaltungsbeispiels nach Figur 1B. Figur 2B zeigt eine Querschnittsdarstellung entlang der Schnittlinie B-B' eines alternativen Ausgestaltungsbeispiels nach Figur 1B.

Die Figuren 2A und 2B unterscheiden sich von den Figuren 1 C und 1 D nur in der Anordnung der Antennenstruktur 4. Die Antennenstruktur 4 ist in diesem Ausgestaltungsbeispiel zwischen der Außenscheibe 2 und der Zwischenschicht 3 angeordnet. Das Dielektrikum zwischen der Antennenstruktur 4 und der Grundplatte 5 wird durch die Zwischenschicht 3 und die Innenscheibe 1 zwischen der Antennenstruktur 4 und der Grundplatte 5 gebildet. Der Folienleiter 10 verläuft im Inneren der Fahrzeugantennenscheibe 100 zwischen der Außenscheibe 2 und der Zwischenschicht 3. Die weiteren Ausgestaltungsmerkmale entsprechen der Beschreibung zu den Figuren 1A bis 1E.

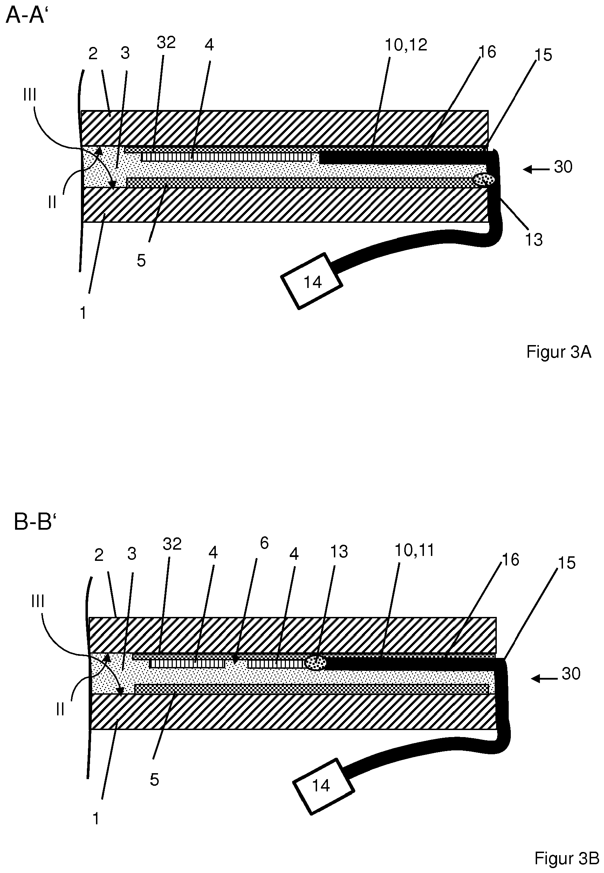

Figur 3A zeigt eine Querschnittsdarstellung entlang der Schnittlinie A-A' eines weiteren alternativen Ausgestaltungsbeispiels nach Figur 1B. Figur 3B zeigt eine Querschnittsdarstellung entlang der Schnittlinie B-B' eines weiteren alternativen Ausgestaltungsbeispiels nach Figur 1B.

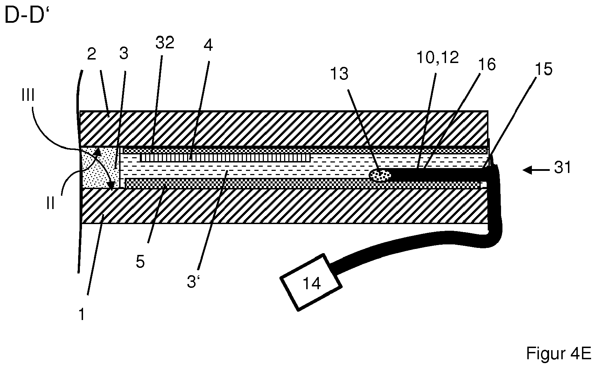

Die Figuren 3A und 3B unterscheiden sich von den Figuren 2A und 2B nur in der Anordnung der Grundplatte 5. Die Antennenstruktur 4 ist in diesem Ausgestaltungsbeispiel zwischen der Außenscheibe 2 und der Zwischenschicht 3 angeordnet. Die Grundplatte 5 ist zwischen der Zwischenschicht 3 und der Innenscheibe 1 angeordnet. Das Dielektrikum zwischen der Antennenstruktur 4 und der Grundplatte 5 wird durch den Bereich der Zwischenschicht 3 zwischen der Antennenstruktur 4 und der Grundplatte 5 gebildet. Die Signalleistung 11 und die Schirmung 12 verlaufen in Inneren der Fahrzeugantennenscheibe 100 zwischen der Außenscheibe 2 und der Zwischenschicht 3, wobei die Schirmung 12 die Grundplatte 5 ebenfalls im Inneren der Fahrzeugantennenscheibe 100 oder am Scheibenrand 30 über eine elektrische Leitungsverbindung 13 kontaktiert. Eine elektrische Leitungsverbindung 13, die im Inneren der Fahrzeugantennenscheibe 100 angeordnet ist, ist beispielsweise in Figur 4E detailliert dargestellt. Die weiteren Ausgestaltungsmerkmale entsprechen der Beschreibung zu den Figuren 1A bis 1E.

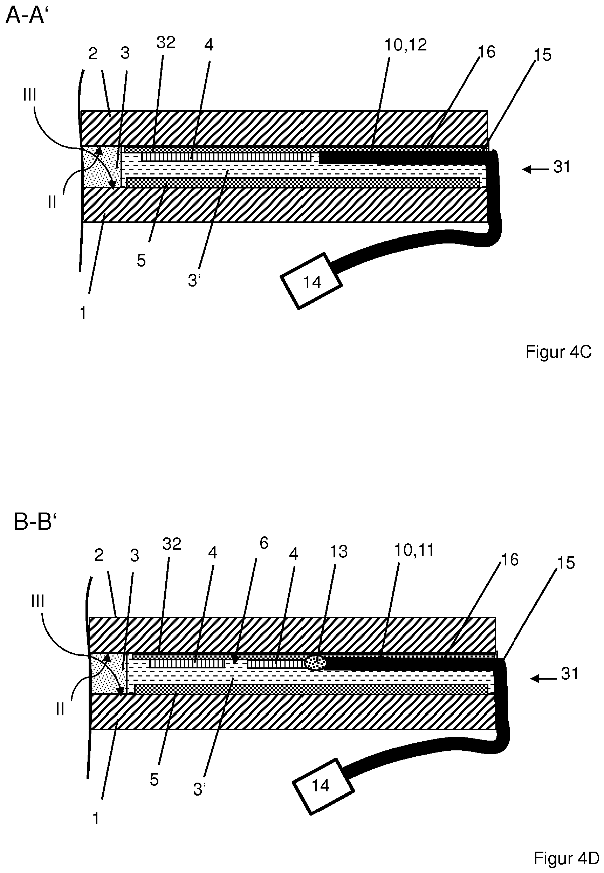

Figur 4A zeigt eine Draufsicht auf eine weitere alternative Ausgestaltung einer erfindungsgemäßen Fahrzeugantennenscheibe 100. Figur 4B zeigt eine vergrößerte Darstellung des Ausschnitts Z aus Figur 4A. Figur 4C zeigt eine Querschnittsdarstellung entlang der Schnittlinie A-A' aus Figur 4B. Figur 4D zeigt eine Querschnittsdarstellung entlang der Schnittlinie B-B' aus Figur 4B. Figur 4E zeigt eine Querschnittsdarstellung entlang der Schnittlinie B-B' aus Figur 4B.

Die Fahrzeugantennenscheibe 100 nach Figur 4A entspricht in Material und Anordnung im Wesentlichen der Fahrzeugantennenscheibe 100 nach Figur 1A, so dass im Folgenden nur auf die Unterschiede zwischen den Fahrzeugantennenscheiben 100 eingegangen wird. Im Unterschied zur Figur 1A ist die Antennenstruktur 4 und die Grundplatte 5 am oberen Seitenrand 31 der Fahrzeugantennenscheibe 100 angeordnet. Die Antennenstruktur 4 und die Grundplatte 5 sind hier in einem Bereich eines Kommunikationsfensters 33 angeordnet. Im Bereich des Kommunikationsfensters 33 sind beispielsweise weitere Sensoren wie ein Regensensor oder eine Kamera angeordnet. Der Bereich des Kommunikationsfensters 33 wird fahrzeuginnenraumseitig durch ein Kunststoffgehäuse bedeckt (hier nicht dargestellt), in dem bevorzugt die Sensoren angeordnet sind. Die Antennenstruktur 4 und die Grundplatte 5 entsprechen in ihren Materialien und Dimensionen der Antennenstruktur 4 und Grundplatte 5 des Ausgestaltungsbeispiels nach Figur 3A und 3B. Im Unterschied zu den Figuren 3A und 3B ist die Zwischenschicht 3 nicht über die komplette Fahrzeugantennenscheibe 100 homogen sondern in zwei Teilbereiche unterteilt. Dabei ist zwischen der Antennenstruktur 4 und der Grundplatte 5 eine Zwischenschicht 3' aus einem Material mit einer relativen Permittivität $\varepsilon_{r,3'}$ welche größer ist als die relative Permittivität $\varepsilon_{r,3}$ des Dielektrikums der Zwischenschicht 3 im umgebenden Bereich. Die Antennenstruktur 4 ist folglich zwischen der Außenscheibe 2 und dem Bereich der Zwischenschicht 3' angeordnet. Die Grundplatte 5 ist zwischen dem Bereich der Zwischenschicht 3' und der Innenscheibe 1 angeordnet. In diesem Ausgestaltungsbeispiel gilt für die Permittivitäten beispielsweise $\varepsilon_{r,3'} = 3*\varepsilon_{r,3}$. Durch eine geeignete Wahl der Zwischenschicht 3' zwischen Antennenstruktur 4 und Grundplatte 5 lassen sich die Antenneneigenschaften besonders gut auf die jeweiligen Anforderungen einstellen.

Des Weiteren sind bei diesem Ausgestaltungsbeispiel einer erfindungsgemäßen Antennenstruktur 4 zwei rechteckförmige Ausnehmungen 8 zu beiden Seiten der elektrischen Leitungsverbindung 13 zwischen Antennenstruktur 4 und Signalleitung 11 in der Grundfläche der Antennenstruktur 4 angeordnet. Diese rechteckförmigen Ausnehmungen 8 verbessern die Auskopplung des Antennensignals aus der Antennenstruktur 4.

Figur 4E zeigt eine Querschnittsdarstellung entlang der Schnittlinie D-D' aus Figur 4B. Zu erkennen ist eine beispielhafte Ausgestaltung der elektrischen Leitungsverbindung 13 zwischen der Schirmung 12 des Streifenleiters 10 und der Grundplatte 5. Dazu ist ein Abschnitt der Schirmung 12 zwischen der Zwischenschicht 3' und der Grundplatte 5 angeordnet. Die elektrische Leitungsverbindung 13 zwischen Schirmung 12 und Grundplatte 5 ist etwa 10 mm vom Scheibenrand 31 beabstandet. Dadurch lässt sich eine einfache und sichere Versiegelung der Leitungsverbindung 13 innerhalb des Scheibenverbunds erzielen, die mechanisch stabilisiert und hermetisch gegen Feuchtigkeit und damit gegen Korrosion geschützt ist.

Es versteht sich, dass diese Maßnahme auch vorteilhafterweise mit den anderen Ausgestaltungen der Erfindung und insbesondere mit der Ausgestaltung in Figur 3A und 3B kombinieren lässt.

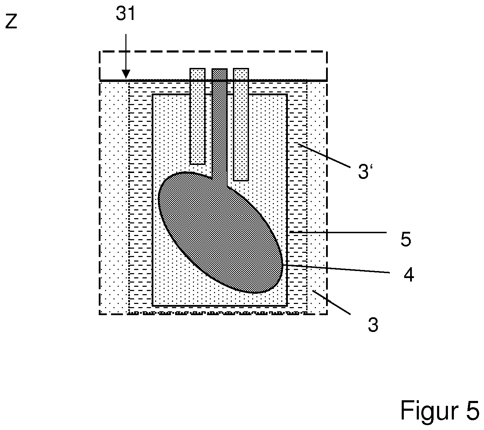

Figur 5 zeigt ein alternatives Ausgestaltungsbeispiel zum Beispiel einer erfindungsgemäßen Fahrzeugantennenscheibe 100 nach Figur 4A bis 4D, wobei lediglich die Grundfläche der Antennenstruktur 4 eine andere Form als in Figur 4A bis 4D aufweist. Die Grundfläche ist hier eine Ellipse, wobei die Signalleitung 11 unter einem Winkel von beispielsweise 45° zu den Haupt- beziehungsweise Nebenachsen angeordnet ist. Die Länge $l_A$ der Grundfläche der Antennenstruktur 4 entspricht in diesem Beispiel dem maximalen Durchmesser der Ellipse, also dem Durchmesser in Richtung der Hauptachse. Die Breite $b_A$ entspricht in diesem Beispiel dem minimalen Durchmesser der Ellipse.

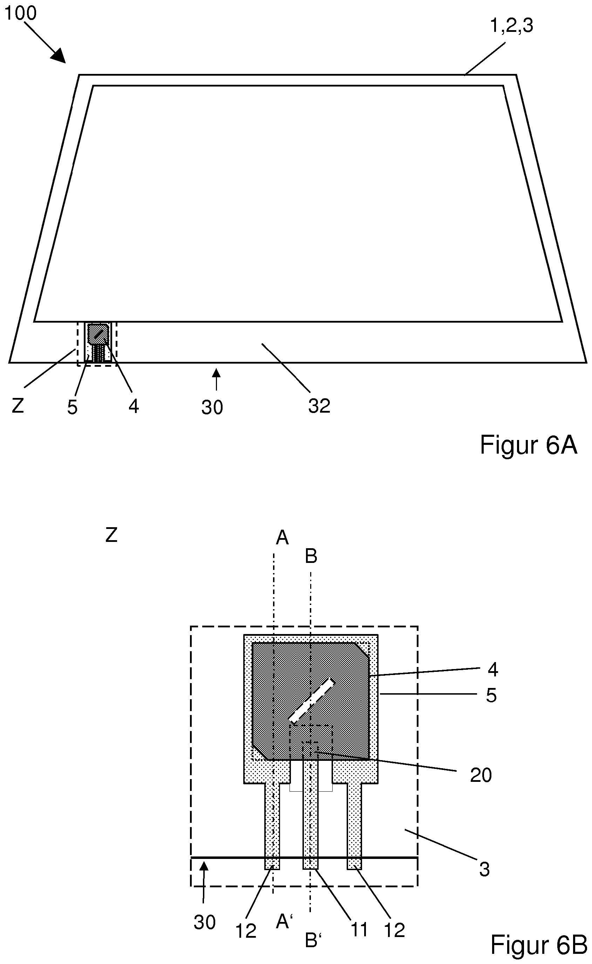

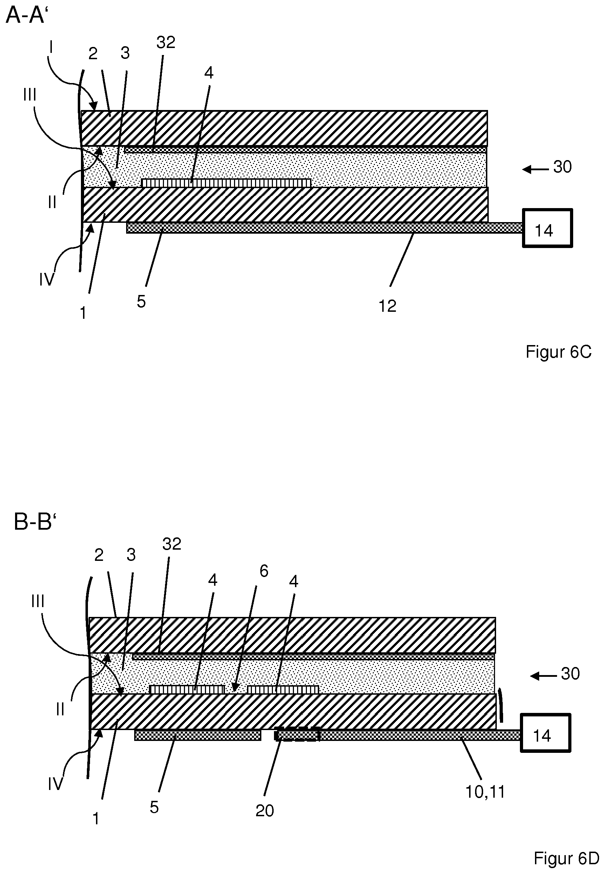

Die Figuren 6A bis 6D zeigen ein nicht erfindungsgemässes Ausgestaltungsbeispiel zum Beispiel einer erfindungsgemäßen Fahrzeugantennenscheibe 100 nach den Figuren 1A bis 1D, wobei lediglich die elektrische Kontaktierung der Antennenstruktur 4 anders ausgestaltet ist. Wie in den Figuren 6A bis 6D dargestellt ist, ist die Signalleitung 11 in der Ebene der Grundplatte 5 und der Schirmung 12 angeordnet, wobei die Schirmung 12 einstückig in die Grundplatte 5 übergeht. Die Signalleitung 11 ist dabei kapazitiv über die Innenscheibe 1 als dazwischenliegendes Dielektrikum mit der Antennenstruktur 4 gekoppelt. Das Antennensignal wird über das Dielektrikum mit dem kapazitiven Kopplungsbereich 20 der Signalleitung 11 gekoppelt und zum Anschlusselement 14 geleitet. Diese Ausgestaltung hat den besonderen Vorteil, dass weder die Signalleitung 11 noch die Schirmung 12 in das Innere der Fahrzeugantennenscheibe 100 geführt werden müssen. Die komplette elektrische Kontaktierung erfolgt über die Ebene der Grundplatte 5, die in diesem Beispiel außerhalb der Fahrzeugantennenscheibe 100 angeordnet ist. Die Grundplatte 5, die Signalleitung 11 und die Schirmung 12, die in diesem Beispiel auch zur unmittelbaren elektrischen Kontaktierung der Grundplatte 5 dient, können auch auf einer Trägerfolie, beispielsweise einer Polyimid-Folie oder einer Polyethylenterephthalat (PET)-Folie, beispielsweise mit jeweils einer Dicke von 0,05 mm angeordnet sein. Alternativ können die Grundplatte 5, die Signalleitung 11 und die Schirmung 12 auch auf einem formstabilen Kunststoffträger wie einer Kameraabdeckung angeordnet sein und mit dem Kunststoffträger, beispielsweise durch Kleben, an der innenseitigen Oberfläche IV der Innenscheibe 1 befestigt werden.

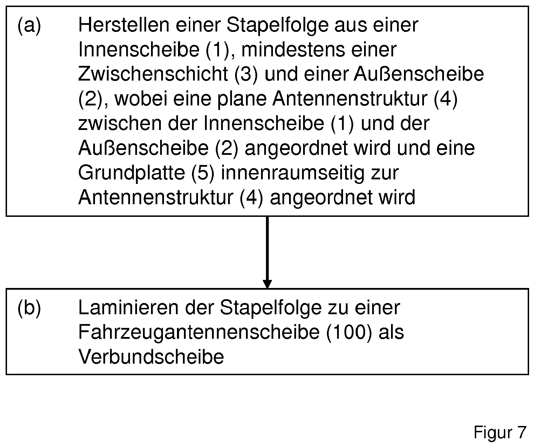

Figur 7 zeigt ein Flussdiagramm eines Ausführungsbeispiels des erfindungsgemäßen Verfahrens zur Herstellung einer erfindungsgemäßen Fahrzeugantennenscheibe 100.

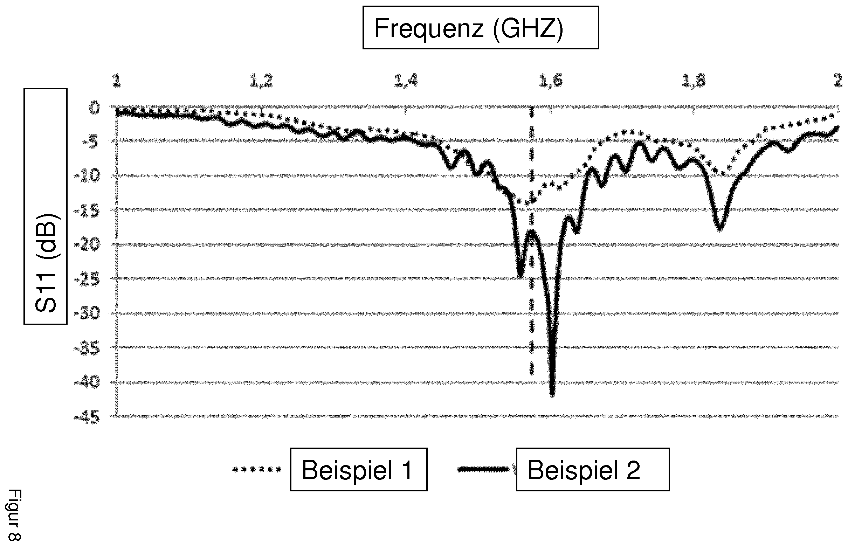

Figur 8 zeigt eine Messung des sogenannten $S_{11}$-Parameters. Dazu wurde ein Netzwerkanalysator mit dem Eingang der Antenne über das Anschlusselement 14 verbunden und die Eingangsreflexion als Funktion der Frequenz gemessen. Der $S_{11}$-Parameter gibt Aufschluss darüber, wie gut (bzw. wie schlecht) der Eingang an ein Referenzsystem (hier 50 Ohm) angepasst ist und gibt damit ein Maß dafür, welcher Anteil des elektrischen Signals in ein elektromagnetisches Signal gewandelt und von der Antenne abgestrahlt wird. Ein hoher $S_{11}$-Wert (hier beispielsweise -5 dB) sagt aus, dass das Eingangssignal stark reflektiert wird, die Antenne schlecht an diese Frequenz angepasst ist und folglich die Antenne das eingespeiste elektrische Signal nicht effektiv in abgestrahlte elektromagnetische Strahlung konvertiert. Ein niedriger $S_{11}$-Wert (hier beispielsweise -40 dB) sagt aus, dass das Eingangssignal nur wenig reflektiert wird, die Antenne also gut an diese Frequenz angepasst ist und folglich die Antenne das eingespeiste elektrische Signal sehr effektiv in abgestrahlte elektromagnetische Strahlung konvertiert. Aus einer guten Signalanpassung kann ebenso geschlossen werden, dass die Antenne eine auftreffende elektromagnetische Strahlung im geeigneten Frequenzband gut absorbiert und effektiv in ein elektrisches Signal konvertiert.

Figur 8 zeigt in Beispiel 1 (gepunktete Linie) eine Messung des $S_{11}$-Parameters im Frequenzbereich von 1 GHz bis 2 GHz an einer Fahrzeugantennenscheibe 100 gemäß dem Ausgestaltungsbeispiel aus Figur 1A bis 1F. Dabei wurde die Fahrzeugantennenscheibe 100 auf einem Prüfstand gemessen. Das heißt, sie war nicht in eine Fahrzeugkarosserie eingebaut. Die Messung ergab einen minimalen Wert von etwa -13 dB bei einer Frequenz von etwa 1,575 GHz. Als Referenzwert ist die Frequenz von 1,575 GHz als vertikale gestrichelte Linie in das Diagramm eingetragen.

Die Messung zeigt, dass die Fahrzeugantennenscheibe 100 aus Beispiel 1 sehr gute Antenneneigenschaften für den GPS-Empfang zeigt, da sie im Bereich von 1,50 GHz bis 1,65 GHz einen $S_{11}$-Wert von weniger als -10 dB aufweist und damit ausreichend breitbandig für einen guten GPS-Empfang als auch für einen guten GLONASS-Empfang ist.

Des Weiteren zeigt Figur 8 im Beispiel 2 (durchgezogene Linie) eine Messung des $S_{11}$-Parameters der Fahrzeugantennenscheibe 100 aus Beispiel 1, wobei die Fahrzeugantennenscheibe 100 in eine Fahrzeugkarosserie eingebaut war. Die Messung ergab einen Wert von -18 dB bei der GPS-Frequenz von 1,575 GHz und sogar einem minimalen Wert von etwa -42 dB bei einer Frequenz von etwa 1,65 GHz.

Die Fahrzeugantennenscheibe 100 aus Beispiel 2 zeigt in eingebautem Zustand, wobei der als Zuleitung dienende Streifenleiter 10 in unmittelbarer Nähe zum Einbaurahmen der Fahrzeugkarosserie geführt wird, im GPS- und GLONASS-relevanten Frequenzbereich von 1,50 GHz bis 1,65 GHz deutlich bessere Empfangseigenschaften (niedrigere $S_{11}$-Werte) als die Fahrzeugantennenscheibe 100 im nicht-eingebauten Zustand aus Beispiel 1. Dieses Ergebnis war für den Fachmann unerwartet und überraschend.

Zusammenfassend besteht die vorliegende Erfindung darin, eine verbesserte Fahrzeugscheibe bereitzustellen, in der eine Antenne und insbesondere eine GPS/GLONASS-Antenne einfach und kostengünstig integriert werden kann.

**Bezugszeichenliste**

| | |
|---|---|
| 1 | Innenscheibe |
| 2 | Außenscheibe |
| 3,3' | Zwischenschicht |
| 4 | Antennenstruktur |
| 5 | Grundplatte |
| 6 | schlitzförmige Ausnehmung |
| 7 | dreiecksförmige Ausnehmung |
| 8 | rechtecksförmige Ausnehmung |
| 10 | Streifenleiter, Folienleiter |
| 11 | Signalleitung |
| 12 | Schirmung |
| 13 | elektrische Leitungsverbindung |
| 14 | Anschlusselement |
| 15 | Innenleiter |
| 16 | elektrische Isolation |
| 20 | kapazitiver Kopplungsbereich |
| 30, 31 | Scheibenrand |
| 32 | Abdeckdruck |
| 33 | Kommunikationsfenster |
| 100 | Fahrzeugantennenscheibe |
| A | Fläche der orthogonalen Projektion der Antennenstruktur 4 |
| $a_D$ | Kathetenlänge der dreiecksförmigen Ausnehmung 7 |
| $b_A$ | Breite der Antennenstruktur 4 |
| $b_G$ | Breite der Grundplatte 5 |
| $b_S$ | Breite der schlitzförmigen Ausnehmung 6 |
| $\varepsilon_{r,1/2}$ | relative Permittivität der Innenscheibe 1 oder Außenscheibe 2 |
| $\varepsilon_{r,3}$, $\varepsilon_{r,3'}$ | relative Permittivität der Zwischenschicht 3, 3' |
| $I_A$ | Länge der Antennenstruktur 4 |
| $I_G$ | Länge der Grundplatte 5 |
| $I_S$ | Länge der schlitzförmigen Ausnehmung 6 |
| A-A' | Schnittlinie |
| B-B' | Schnittlinie |
| C-C' | Schnittlinie |
| Z | Ausschnitt |
| I | außenseitige Oberfläche der Außenscheibe 2 |
| II | innenseitige Oberfläche der Außenscheibe 2 |
| III | außenseitigen Oberfläche der Innenscheibe 1 |
| IV | innenseitigen Oberfläche der Innenscheibe 1 |

**Patentansprüche**

1. Fahrzeugantennenscheibe (100) zur Abtrennung eines Fahrzeuginnenraums von einer äußeren Umgebung, mindestens umfassend:

- eine Innenscheibe (1) mit einer außenseitigen Oberfläche (III),
- eine Außenscheibe (2) mit einer innenseitigen Oberfläche (II),
- mindestens eine Zwischenschicht (3,3'), die die innenseitige Oberfläche (II) der Außenscheibe (2) flächig mit der außenseitigen Oberfläche (III) der Innenscheibe (1) verbindet,
- eine plane Antennenstruktur (4), die zwischen der Innenscheibe (1) und der Außenscheibe (2) angeordnet ist,
- eine Grundplatte (5), die innenraumseitig zur Antennenstruktur (4) angeordnet ist,
wobei
- zwischen der Antennenstruktur (4) und der Grundplatte (5) mindestens ein Dielektrikum angeordnet ist und das Dielektrikum zumindest aus der Innenscheibe (1), aus der Zwischenschicht (3,3') oder aus der Innenscheibe (1) und der Zwischenschicht (3,3') besteht,
- die Antennenstruktur (4) eine Grundfläche mit einem Verhältnis von Länge $I_A$ zu Breite $b_A$ von 1:1 bis 10:1 aufweist,
- die Grundplatte (5) zumindest im Bereich der orthogonalen Projektion der Antennenstruktur (4) bezüglich der Innenscheibe (1) angeordnet ist, **dadurch gekennzeichnet dass**
- der Antennenfußpunkt der Antennenstruktur (4) über einen Folienleiter (10) zum Seitenrand (30,31) der Fahrzeugantennenscheibe (100) und aus dieser herausgeführt ist und der Folienleiter (10) zumindest in einem Bereich, der benachbart zu einer Fahrzeugkarosserie angeordnet werden kann, als Streifenleiter und bevorzugt als koplanarer Streifenleiter ausgebildet ist, dessen Schirmung (12) mit der Grundplatte (5) elektrisch verbunden ist.

2. Fahrzeugantennenscheibe (100) nach Anspruch 1, wobei die Antennenstruktur (4) und/oder die Grundplatte (5) aus

   - einer gedruckten und eingebrannten elektrisch leitfähigen Paste, bevorzugt eine silberhaltige Siebdruckpaste und/oder
   - einer elektrisch leitfähigen Folie, bevorzugt einer Metallfolie und insbesondere einer Kupfer-, Silber-, Gold- oder Aluminiumfolie und/oder
   - einer elektrisch leitfähigen Struktur, die aus einer elektrisch leitfähigen Schicht durch einen beschichtungsfreien Trennbereich, insbesondere eine beschichtungsfreie Trennlinie, von der umgebenden Schicht elektrisch isoliert ist, besteht.

3. Fahrzeugantennenscheibe (100) nach Anspruch 2, wobei die elektrisch leitfähige Schicht transparent ist und/oder einen Flächenwiderstand von 0,4 Ohm/Quadrat bis 200 Ohm/Quadrat und bevorzugt von 0,5 Ohm/Quadrat bis 20 Ohm/Quadrat aufweist und/oder Silber (Ag), Indium-Zinnoxid (ITO), fluordotiertes Zinnoxid ($SnO_2$:F) oder aluminiumdotiertes Zinkoxid (ZnO:Al) enthält.

4. Fahrzeugantennenscheibe (100) nach Anspruch 2 oder 3, bei welcher die Antennenstruktur (4) und/oder die Grundplatte (5) aus einer gedruckten und eingebrannten elektrisch leitfähigen Paste, bevorzugt eine silberhaltige Siebdruckpaste, besteht, wobei die gedruckte und eingebrannte elektrisch leitfähige Paste eine Dicke von 3 $\mu$m bis 20 $\mu$m und einen Flächenwiderstand von 0,001 Ohm/Quadrat bis 0,03 Ohm/Quadrat, bevorzugt von 0,002 Ohm/Quadrat bis 0,018 Ohm/Quadrat, aufweist.

5. Fahrzeugantennenscheibe (100) nach einem der Ansprüche 2 bis 4, wobei die elektrisch leitfähige Folie eine Dicke von 50 $\mu$m bis 1000 $\mu$m, bevorzugt von 100 $\mu$m bis 600 $\mu$m und eine Leitfähigkeit von $1*10^6$ S/m bis $10*10^7$ S/m, bevorzugt von $3,5*10^7$ S/m bis $6,5*10^7$ S/m, aufweist.

6. Fahrzeugantennenscheibe (100) nach einem der Ansprüche 1 bis 5, wobei die Schirmung (12) auf einer Trägerfolie angeordnet ist und die Trägerfolie bevorzugt Polyimid oder Polyethylenterephthalat (PET) enthält oder daraus besteht, und die Trägerfolie bevorzugt eine relative Permittivität von 2 bis 4 und besonders bevorzugt von 2,7 bis 3,3 aufweist.

7. Fahrzeugantennenscheibe (100) nach Anspruch 6, wobei die Antennenstruktur (4) und die Signalleitung (10) des Folienleiters (10) und/oder die Grundplatte (5) und die Schirmung (12) des Folienleiters (10) einstückig ausgebildet sind, wobei insbesondere die Signalleitung (10) auf einer Trägerfolie angeordnet ist und die Trägerfolie bevorzugt Polyimid oder Polyethylenterephthalat (PET) enthält oder daraus besteht, und die Trägerfolie bevorzugt eine relative Permittivität von 2 bis 4 und besonders bevorzugt von 2,7 bis 3,3 aufweist.

8. Fahrzeugantennenscheibe (100) nach einem der Ansprüche 1 bis 7, wobei die Zwischenschicht (3') im Bereich zwischen der Antennenstruktur (4) und der Grundplatte (5) ein Dielektrikum mit einer relativen Permittivität $\varepsilon_{r,3'}$ aufweist, welche größer ist als die relative Permittivität $\varepsilon_{r,3}$ des Dielektrikums der Zwischenschicht (3) im umgebenden Bereich und bevorzugt $\varepsilon_{r,3'} \geq 3* \varepsilon_{r,3}$ gilt.

9. Fahrzeugantennenscheibe (100) nach einem der Ansprüche 1 bis 8, wobei die Antennenstruktur (4) und/oder die Grundplatte (5) auf einer Trägerfolie angeordnet ist und die Trägerfolie bevorzugt Polyimid oder Polyethylenterephthalat (PET) enthält oder daraus besteht, und die Trägerfolie bevorzugt eine relative Permittivität von 2 bis 4 und besonders bevorzugt von 2,7 bis 3,3 aufweist.

10. Fahrzeugantennenscheibe (100) nach einem der Ansprüche 1 bis 9, wobei die Innenscheibe (1) und/oder die Außenscheibe (2) Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält, und/oder eine relative Permittivität $\varepsilon_{r,1/4}$ von 2 bis 8 und besonders bevorzugt von 6 bis 8 aufweist.

11. Fahrzeugantennenscheibe (100) nach einem der Ansprüche 2 bis 7, wobei die Antennenstruktur (4) und/oder die Grundplatte (5) aus einer elektrisch leitfähigen Struktur besteht, die aus einer elektrisch leitfähigen Schicht durch einen vollständig oder abschnittsweise beschichtungsfreien Trennbereich von der umgebenden Schicht elektrisch isoliert ist und die Breite des Trennbereichs größer oder gleich 5 mm und bevorzugt von 50 mm bis 90 mm beträgt.

**12.** Fahrzeugantennenscheibenanordnung umfassend:

- eine Fahrzeugantennenscheibe (100) nach einem der Ansprüche 1 bis 11 und
- eine Empfangs- oder Sendeelektronik, die mit der Antennenstruktur (4) und der Grundplatte (5) elektrisch gekoppelt ist,

wobei die Fahrzeugantennenscheibe (100) als Verglasung in einer Fahrzeugkarosserie angeordnet ist.

**13.** Verfahren zur Herstellung einer Fahrzeugantennenscheibe (100) nach einem der Ansprüche 1 bis 11, mindestens umfassend:

(a) Herstellen einer Stapelfolge aus einer Innenscheibe (1), mindestens einer Zwischenschicht (3) und einer Außenscheibe (2), wobei eine plane Antennenstruktur (4) zwischen der Innenscheibe (1) und der Außenscheibe (2) angeordnet wird und eine Grundplatte (5) innenraumseitig zur Antennenstruktur (4) angeordnet wird und
(b) Laminieren der Stapelfolge zu einer Fahrzeugantennenscheibe (100).

**14.** Verwendung der Fahrzeugantennenscheibe (100) nach einem der Ansprüche 1 bis 11 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe.

**15.** Verwendung der Fahrzeugantennenscheibe (100) nach einem der Ansprüche 1 bis 11 zum Empfang von Signalen zur satellitengestützten Navigation, insbesondere zum Empfang eines rechts-zirkular polarisierten GPS-Signals mit einer L1-Frequenz von 1575,42 MHz und/oder eines GLONASS-Signals mit einer Frequenz von 1602 MHz $\pm$ 4 Mhz.

**Claims**

**1.** Vehicle antenna pane (100) for separating a vehicle interior from external surroundings, at least comprising:

- an inner pane (1) having an exterior-side surface (III),
- an outer pane (2) having an interior-side surface (II),
- at least one intermediate layer (3,3'), which connects the interior-side surface (II) of the outer pane (2) areally with the exterior-side surface (III) of the inner pane (1),
- a planar antenna structure (4), which is arranged between the inner pane (1) and the outer pane (2),
- a base plate (5), which is arranged on the interior side in relation to the antenna structure (4), wherein
- at least one dielectric is arranged between the antenna structure (4) and the base plate (5), and the dielectric consists at least of the inner pane (1), of the intermediate layer (3,3'), or of the inner pane (1) and the intermediate layer (3,3'),
- the antenna structure (4) has a base with a ratio of length $l_A$ to width $b_A$ of 1:1 to 10:1,
- the base plate (5) is arranged at least in the region of the orthogonal projection of the antenna structure (4) relative to the inner pane (1), **characterized in that**
- the antenna foot point of the antenna structure (4) is guided via a foil conductor (10) to the side edge (30,31) of the vehicle antenna pane (100) and is guided out of it, and the foil conductor (10) can be arranged, at least in a region that is adjacent a vehicle body, as a strip conductor and preferably as a coplanar strip conductor, whose shield (12) is electrically connected to the base plate (5).

**2.** Vehicle antenna pane (100) according to claim 1, wherein the antenna structure (4) and/or the base plate (5) consists of

- a printed and fired electrically conductive paste, preferably a silver-containing screen printing paste, and/or
- an electrically conductive foil, preferably a metal foil and in particular a copper, silver, gold, or aluminum foil and/or
- an electrically conductive structure, which is electrically isolated out of an electrically conductive layer by a coating-free separation zone, in particular a coating-free separation line, from the surrounding layer.

**3.** Vehicle antenna pane (100) according to claim 2, wherein the electrically conductive layer is transparent and/or has a sheet resistance of 0.4 ohm/square to 200 ohm/square and preferably of 0.5 ohm/square to 20 ohm/square and/or contains silver (Ag), indium tin oxide (ITO), fluorine-doped tin oxide ($SnO_2$:F), or aluminum-doped zinc oxide (ZnO:Al).

**4.** Vehicle antenna pane (100) according to claim 2 or 3, wherein the antenna structure (4) and/or the base plate (5) consists of a printed and fired electrically conductive paste, preferably a silver-containing screen printing paste, wherein the printed and fired electrically conductive paste has a thickness of 3 $\mu$m to 20 $\mu$m and a sheet resistance of 0.001 ohm/square to 0.03 ohm/square, preferably of 0.002 ohm/square to 0.018 ohm/square.

5. Vehicle antenna pane (100) according to one of claims 2 through 4, wherein the electrically conductive foil has a thickness of 50 $\mu$m to 1000 $\mu$m preferably of 100 $\mu$m to 600 $\mu$m and conductivity of $1*10^6$ S/m to $10*10^7$ S/m, preferably of $3.5*10^7$ S/m to $6.5*10^7$ S/m.

6. Vehicle antenna pane (100) according to one of claims 1 through 5, wherein the shield (12) is arranged on a carrier film, and the carrier film preferably contains or is made of polyimide or polyethylene terephthalate (PET), and the carrier film preferably has relative permittivity of 2 to 4 and particularly preferably of 2.7 to 3.3.

7. Vehicle antenna pane (100) according to claim 6, wherein the antenna structure (4) and the signal line (10) of the foil conductor (10) and/or the base plate (5) and the shield (12) of the foil conductor (10) are implemented in one piece, wherein in particular the signal line (10) is arranged on a carrier film and the carrier film preferably contains or is made of polyimide or polyethylene terephthalate (PET), and the carrier film preferably has relative permittivity of 2 to 4 and particularly preferably of 2.7 to 3.3.

8. Vehicle antenna pane (100) according to one of claims 1 through 7, wherein the intermediate layer (3') has, in the region between the antenna structure (4) and the base plate (5), a dielectric with relative permittivity $\varepsilon_{r,3'}$ that is greater than the relative permittivity $\varepsilon_{r,3}$ of the dielectric of the intermediate layer (3) in the surrounding region and preferably $\varepsilon_{r,3'} \geq 3* \varepsilon_{r,3}$ applies..

9. Vehicle antenna pane (100) according to one of claims 1 through 8, wherein the antenna structure (4) and/or the base plate (5) is arranged on a carrier film and the carrier film preferably contains or is made of polyimide or polyethylene terephthalate (PET), and the carrier film preferably has relative permittivity of 2 to 4 and particularly preferably of 2.7 to 3.3.

10. Vehicle antenna pane (100) according to one of claims 1 through 9, wherein the inner pane (1) and/or the outer pane (2) contains glass, preferably flat glass, float glass, quartz glass, borosilicate glass, soda lime glass, or polymers, preferably polyethylene, polypropylene, polycarbonate, polymethyl methacrylate, and/or mixtures thereof, and/or has

relative permittivity $\varepsilon_{r,1/4}$ of 2 to 8 and particularly preferably of 6 to 8.

11. Vehicle antenna pane (100) according to one of claims 2 through 7, wherein the antenna structure (4) and/or the base plate (5) consists of an electrically conductive structure, which is electrically isolated out of an electrically conductive layer by a completely or section-wise coating-free separation zone from the surrounding layer and the width of the separation zone is greater than or equal to 5 mm and is preferably from 50 mm to 90 mm.

12. Vehicle antenna pane arrangement comprising:

- a vehicle antenna pane (100) according to one of claims 1 through 11 and
- receiving or transmitting electronics that are electrically coupled to the antenna structure (4) and the base plate (5), wherein the vehicle antenna pane (100) is arranged as glazing in a vehicle body.

13. Method for producing a vehicle antenna pane (100) according to one of claims 1 through 11, at least comprising:

(a) producing a stack sequence of an inner pane (1), at least one intermediate layer (3), and an outer pane (2), wherein a planar antenna structure (4) is arranged between the inner pane (1) and the outer pane (2), and a base plate is arranged (5) on the interior side in relation to the antenna structure (4), and
(b) laminating the stack sequence to form a vehicle antenna pane (100).

14. Use of the vehicle antenna pane (100) according to one of claims 1 through 11 in means of transportation for travel on land, in the air, or on water, in particular in motor vehicles , for example, as a windshield, rear window, side windows, and/or roof panel.

15. Use of the vehicle antenna pane (100) according to one of claims 1 through 11 for reception of signals for satellite-supported navigation, in particular for reception of a right circularly polarized GPS signal with an L1 frequency of 1575.42 MHz and/or a GLONASS signal with a frequency of 1602 MHz $\pm$ 4 MHz.

**Revendications**

1. Vitrage à antenne de véhicule (100) pour la séparation d'un espace intérieur de véhicule vis-à-vis d'un environnement extérieur, comportant au moins :

- une vitre intérieure (1) ayant une surface côté extérieur (III) ;
- une vitre extérieure (2) ayant une surface côté intérieur (II) ;
- au moins une couche intermédiaire (3, 3'), qui relie la surface côté intérieur (II) de la vitre extérieure (2) sur toute la surface avec la surface côté extérieur (III) de la vitre intérieure (1) ;
- une structure d'antenne plane (4), qui est disposée entre la vitre intérieure (1) et la vitre extérieure (2) ;
- une plaque de base (5), qui est disposée côté espace intérieur par rapport à la structure d'antenne (4),
dans lequel :

- au moins un diélectrique est disposé entre la structure d'antenne (4) et la plaque de base (5) et le diélectrique est constitué au moins par la vitre intérieure (1), par la couche intermédiaire (3, 3') ou par la vitre intérieure (1) et la couche intermédiaire (3, 3') ;
- la structure d'antenne (4) présente une surface de base ayant un rapport de longueur $l_A$ à largeur $b_A$ de 1:1 à 10:1 ;
- la plaque de base (5) est disposée au moins dans la région de la projection orthogonale de la structure d'antenne (4) par rapport à la vitre intérieure (1),

**caractérisé par le fait que** :

- le point de pied d'antenne de la structure d'antenne (4) est mené par l'intermédiaire d'un conducteur en feuille (10) jusqu'au bord latéral (30, 31) du vitrage à antenne de véhicule (100) et hors de celui-ci et le conducteur en feuille (10), au moins dans une région qui peut être disposée adjacente à une carrosserie du véhicule, est réalisé en tant que conducteur en bande et, de préférence, en tant que conducteur en bande coplanaire, dont le blindage (12) est connecté électriquement à la plaque de base (5).

2. Vitrage à antenne de véhicule (100) selon la revendication 1, dans lequel la structure d'antenne (4) et/ou la plaque de base (5) sont constituées par :

- une pâte conductrice de l'électricité, imprimée et cuite, de préférence une pâte de sérigraphie à teneur en argent et/ou
- une feuille conductrice de l'électricité, de préférence une feuille métallique et en particulier une feuille de cuivre, d'argent, d'or ou d'aluminium et/ou
- une structure conductrice de l'électricité, qui est isolée électriquement d'une couche conductrice de l'électricité par une région de séparation exempte de revêtement, en particulier une ligne de séparation exempte de revêtement, de la couche environnante.

3. Vitrage à antenne de véhicule (100) selon la revendication 2, dans lequel la couche conductrice de l'électricité est transparente et/ou présente une résistance par carré de 0,4 Ohm/carré à 200 Ohm/carré et, de préférence, de 0,5 Ohm/carré à 20 Ohm/carré et/ou contient de l'argent (Ag), de l'oxyde d'indium et d'étain (ITO), de l'oxyde d'étain dopé au fluor ($SnO_2$:F) ou de l'oxyde de zinc dopé à l'aluminium (ZnO:Al).

4. Vitrage à antenne de véhicule (100) selon l'une des revendications 2 ou 3, dans lequel la structure d'antenne (4) et/ou la plaque de base (5) sont constituées d'une pâte conductrice de l'électricité imprimée et cuite, de préférence une pâte de sérigraphie à teneur en argent, la pâte conductrice de l'électricité imprimée et cuite présentant une épaisseur de 3 $\mu$m à 20 $\mu$m et une résistance par carré de 0,001 Ohm/carré à 0,03 Ohm/carré, de préférence de 0,002 Ohm/carré à 0,018 Ohm/carré.

5. Vitrage à antenne de véhicule (100) selon l'une quelconque des revendications 2 à 4, dans lequel la feuille conductrice de l'électricité présente une épaisseur de 50 $\mu$m à 1000 $\mu$m, de préférence de 100 $\mu$m à 600 $\mu$m et une conductivité de $1*10^6$ S/m à $10*10^7$ S/m, de préférence de $3,5*10^7$ S/m à $6,5*10^7$ S/m.

6. Vitrage à antenne de véhicule (100) selon l'une des revendications 1 à 5, dans lequel le blindage (12) est disposé sur une feuille de support et la feuille de support contient, de préférence, du polyimide ou du poly(téréphtalate d'éthylène) (PET) ou en est constituée, et la feuille de support présente, de préférence, une permittivité relative de 2 à 4 et de façon particulièrement préférée de 2,7 à 3,3.

7. Vitrage à antenne de véhicule (100) selon la revendication 6, dans lequel la structure d'antenne (4) et la ligne de signal (10) du conducteur en feuille (10) et/ou la plaque de base (5) et le blindage (12) du conducteur en feuille (10) sont formés d'un seul tenant, où, en particulier, la ligne de signal (10) est disposée sur une feuille de support et la feuille de support contient, de préférence, du polyimide ou du poly(téréphtalate d'éthylène) (PET) ou en est constituée, et la feuille de support présente, de préférence, une permittivité relative de 2 à 4 et de façon particulièrement préférée de 2,7 à 3,3.

8. Vitrage à antenne de véhicule (100) selon l'une quelconque des revendications 1 à 7, dans lequel la couche intermédiaire (3') présente, dans la région entre la structure d'antenne (4) et la plaque de base (5), un diélectrique ayant une permittivité relative $\varepsilon_{r,3'}$, laquelle est plus grande que la permittivité relative $\varepsilon_{r,3}$ du diélectrique de la couche intermédiaire (3) dans la région environnante et, de préférence, $\varepsilon_{r,3'} \geq 3* \varepsilon_{r,3}$.

9. Vitrage à antenne de véhicule (100) selon l'une des revendications 1 à 8, dans lequel la structure d'antenne (4) et/ou la plaque de base (5) sont disposées sur une feuille de support et la feuille de support contient, de préférence, du polyimide ou du poly-téréphtalate d'éthylène) (PET) ou en est constituée, et la feuille de support présente, de préférence, une permittivité relative de 2 à 4 et de façon particulièrement préférée de 2,7 à 3,3.

10. Vitrage à antenne de véhicule (100) selon l'une des revendications 1 à 9, dans lequel la vitre intérieure (1) et/ou la vitre extérieure (2) contiennent du verre, de préférence du verre plat, du verre flotté, du verre de quartz, du verre borosilicaté, du verre sodocalcique, ou des polymères, de préférence du polyéthylène, du polypropylène, du polycarbonate, du poly(méthacrylate de méthyle) et/ou des mélanges de ceux-ci, et/ou présente une permittivité relative $\varepsilon_{r,1/4}$ de 2 à 8 et de façon particulièrement préférée de 6 à 8.

11. Vitrage à antenne de véhicule (100) selon l'une des revendications 2 à 7, dans lequel la structure d'antenne (4) et/ou la plaque de base (5) consistent en une structure conductrice de l'électricité, qui est isolée électriquement d'une couche conductrice de l'électricité par une région de séparation, exempte de revêtement entièrement ou par sections, de la couche environnante et la largeur de la région de séparation est supérieure ou égale à 5 mm et, de préférence, de 50 mm à 90 mm.

12. Ensemble vitrage à antenne de véhicule comportant :

    - un vitrage à antenne de véhicule (100) selon l'une des revendications 1 à 11 ; et
    - une électronique de réception ou d'émission, qui est couplée électriquement à la structure d'antenne (4) et à la plaque de base (5),

    le vitrage à antenne de véhicule (100) étant disposé en tant que vitrage dans une carrosserie de véhicule.

13. Procédé de fabrication d'un vitrage à antenne de véhicule (100) selon l'une des revendications 1 à 11, comportant au moins :

    (a) fabriquer une séquence d'empilement faite d'une vitre intérieure (1), d'au moins une couche intermédiaire (3) et d'une vitre extérieure (2), une structure d'antenne plane (4) étant disposée entre la vitre intérieure (1) et la vitre extérieure (2) et une plaque de base (5) étant disposée côté espace intérieur par rapport à la structure d'antenne (4) ; et
    (b) stratifier la séquence d'empilement en un vitrage à antenne de véhicule (100).

14. Utilisation du vitrage à antenne de véhicule (100) selon l'une des revendications 1 à 11 dans des moyens de locomotion pour le transport sur terre, dans les airs ou dans l'eau, en particulier dans des véhicules automobiles par exemple en tant que parebrise, vitre arrière, vitres latérales et/ou vitre de toit.

15. Utilisation du vitrage à antenne de véhicule (100) selon l'une des revendications 1 à 11 pour la réception de signaux pour la navigation par satellite, en particulier pour la réception d'un signal GPS à polarisation circulaire droite avec une fréquence L1 de 1575,42 MHz et/ou d'un signal GLONASS avec une fréquence de 1602 MHz $\pm$ 4 MHz.

100

1,2,3

Z    5    4    30    32

## Figur 1A

Z

A    B    $b_A$
          $b_G$
$I_A$  $I_G$    $a_D$

7

6    4

5

C    C'

$I_S$

$b_S$

3

30    12    A'    11    12
          B'

## Figur 1B

A-A'

Figur 1C

B-B'

Figur 1D

C-C'

Figur 1E

...

A-A'

Figur 2A

B-B'

Figur 2B

A-A'

Figur 3A

B-B'

Figur 3B

100

Z  5  4  33  31  1,2,3

32

Figur 4A

Z  31  B'
D' A'

8  8

5
4

3

3'

D A  B

Figur 4B

A-A'

Figur 4C

B-B'

Figur 4D

D-D'

Figur 4E

Figur 5

100

1,2,3

Z   5   4      30      32

Figur 6A

Z

A
B

4
5

20

3

30  12  A'
B'  11  12

Figur 6B

A-A'

Figur 6C

B-B'

Figur 6D

(a) Herstellen einer Stapelfolge aus einer Innenscheibe (1), mindestens einer Zwischenschicht (3) und einer Außenscheibe (2), wobei eine plane Antennenstruktur (4) zwischen der Innenscheibe (1) und der Außenscheibe (2) angeordnet wird und eine Grundplatte (5) innenraumseitig zur Antennenstruktur (4) angeordnet wird

(b) Laminieren der Stapelfolge zu einer Fahrzeugantennenscheibe (100) als Verbundscheibe

Figur 7

Figur 8

EP 3 281 247 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140176374 A1
- WO 0022695 A1
- DE 202006011919 U1
- DE 202010011837 U1
- US 5760744 A
- EP 0608180 A1
- DE 3834075 A1
- US 20060202898 A1
- DE 202008017611 U1
- EP 0847965 B1
- WO 2012052315 A1